(19) Europäisches Patentamt European Patent Office Office européen des brevets

(11) **EP 4 745 554 A1**

(12) **EUROPEAN PATENT APPLICATION**
published in accordance with Art. 153(4) EPC

(43) Date of publication:
**20.05.2026 Bulletin 2026/21**

(21) Application number: **24842896.3**

(22) Date of filing: **24.06.2024**

(51) International Patent Classification (IPC):
**G01N 15/0205** (2024.01)   **G01N 15/02** (2024.01)
**G01N 21/49** (2006.01)

(52) Cooperative Patent Classification (CPC):
**G01N 15/02; G01N 15/0205; G01N 21/49**

(86) International application number:
**PCT/JP2024/022724**

(87) International publication number:
**WO 2025/018100 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023115860**

(71) Applicant: **FUJIFILM Corporation
Tokyo 106-8620 (JP)**

(72) Inventors:
• **NAKAMURA, Sohichiro
Ashigarakami-gun, Kanagawa 258-8577 (JP)**
• **HAMADA, Kenichi
Ashigarakami-gun, Kanagawa 258-8577 (JP)**

(74) Representative: **HGF
HGF Limited
4th Floor, 1 City Square
Leeds LS1 2ES (GB)**

(54) **OPTICAL MEASURING METHOD AND OPTICAL MEASURING DEVICE**

(57)    Provided are an optical measurement method and an optical measurement device for accurately measuring a particle size and a particle size distribution of particles contained in a dispersion liquid containing particles having a property of absorbing light. An optical measurement method for a dispersion liquid containing particles includes a measurement step of measuring, a plurality of times, scattered light obtained by causing incident light to be incident on the dispersion liquid while varying an intensity of the incident light, a conversion step of converting signals of the scattered light measured the plurality of times in the measurement step into time-varying characteristic data of a plurality of scattered electric fields or scattering intensities, and a particle size calculation step of obtaining particle sizes of the particles by using the time-varying characteristic data of the plurality of scattered electric fields or scattering intensities obtained in the conversion step.

FIG. 1

EP 4 745 554 A1

**Description**

**BACKGROUND OF THE INVENTION**

1. Field of the Invention

The present invention relates to an optical measurement method and an optical measurement device for a dispersion liquid containing particles, and particularly relates to an optical measurement method and an optical measurement device for measuring a particle size or a particle size distribution of particles having a property of absorbing light.

2. Description of the Related Art

In various fields such as industry, environment, medicine, and academia, it is important and necessary to quantitatively measure a size of nanoparticles of about 1 to 100 nm in a liquid with high accuracy.

Examples of the representative method for the quantification of the nanoparticles include a dynamic light scattering method, a low-coherence dynamic light scattering method, a particle tracking analyzer that measures a displacement of particles under a microscope, and a multi-modal light scattering measurement method that combines a Mie scattering angle profile and dynamic light scattering information. By using these methods, a diffusion coefficient of the particles is measured, and the diffusion coefficient is converted into a particle size. Currently, more specific particle measurement methods are being proposed.

For example, WO2013/077137A discloses a measurement device that performs dynamic light scattering measurement of particles in a sample medium, the measurement device including a light splitting section that splits light from a low-coherence light source, an irradiation section that irradiates the sample medium with one of the light beams split by the light splitting section, a phase modulation section that phase-modulates the other of the light beams split by the light splitting section, a spectroscopic spectrum acquisition section that resolves, for each wavelength, the phase-modulated light beam and scattered light from the sample medium to acquire a spectroscopic spectrum of interference light between the phase-modulated light beam and the scattered light, and a measurement section that performs the dynamic light scattering measurement of the particles based on the acquired spectroscopic spectrum, in which the measurement section obtains an intensity signal for each position of a scattering point in the sample medium based on the acquired spectroscopic spectrum, obtains a power spectrum for each position of the scattering point based on a time change of the intensity signal for each position of the scattering point, and obtains a diffusion coefficient of the particles for each position of the scattering point based on the obtained power spectrum.

WO2013/077137A discloses that a particle size distribution (particle size for each position of the scattering point) in the sample medium can also be simultaneously measured by obtaining the particle size from the diffusion coefficient by using a Stokes-Einstein expression.

**SUMMARY OF THE INVENTION**

WO2013/077137A discloses that the particle size and the particle size distribution are obtained from the diffusion coefficient by using the Stokes-Einstein expression (see the following expression (1)). However, WO2013/077137A does not take into consideration the absorption of light from the low-coherence light source by the particles. In a case in which the particles absorb light, a temperature of the particles may rise. Here, the above-described Stokes-Einstein expression has a temperature term, and in a case in which the temperature changes, for example, in a case in which the temperature of the particles rises, an accurate particle size cannot be obtained.

For this reason, in WO2013/077137A, it is not possible to accurately obtain the particle size and the particle size distribution for black particles such as carbon black and particles having a property of absorbing light such as pigment particles.

In order to avoid the influence of the light absorption by the particles, it is considered to use a light source having a wavelength that is not absorbed by the particles, but, in this case, the preparation of the light source is costly. Furthermore, since the black particles and the like absorb light in a wide wavelength range, it is difficult to eliminate the influence of the light absorption.

As described above, it is currently difficult to accurately quantify the particle size and the particle size distribution of the particles having the property of absorbing light.

An object of the present invention is to provide an optical measurement method and an optical measurement device for accurately measuring a particle size and a particle size distribution of particles contained in a dispersion liquid containing particles having a property of absorbing light.

In order to achieve the above-described object, an invention [1] relates to an optical measurement method for a dispersion liquid containing particles, the optical measurement method comprising: a measurement step of measuring, a plurality of times, scattered light obtained by causing incident light to be incident on the dispersion liquid while varying an intensity of the incident light; a conversion step of converting signals of the scattered light measured the plurality of times in the measurement step into time-varying characteristic data of a plurality of scattered electric fields or scattering intensities; and a particle size calculation step of obtaining particle sizes of the particles by using the time-varying characteristic data of the plurality of scattered electric fields or scattering intensities obtained in the conversion step.

An invention [2] relates to the optical measurement method according to the invention [1], in which, in the particle size calculation step, the particle sizes of the particles are obtained by analyzing the time-varying characteristic data of the plurality of scattered electric fields or scattering intensities on an assumption that diffusion coefficients of the particles have linear dependence on the intensity of the incident light, and obtaining a relationship between the particle sizes of the particles or the diffusion coefficients of the particles and the intensity of the incident light.

An invention [3] relates to the optical measurement method according to the invention [2], further comprising: a step of obtaining a second temperature after the particles at a first temperature have undergone a temperature rise due to light absorption of the incident light; and a step of obtaining particle sizes of the particles at the second temperature by using an expression representing a diffusion coefficient in a case in which the temperature rise occurs, for the particle sizes of the particles obtained in the particle size calculation step.

An invention [4] relates to an optical measurement method for a dispersion liquid containing particles, the optical measurement method comprising: a measurement step of measuring, a plurality of times, scattered light obtained by causing incident light to be incident on the dispersion liquid while varying an intensity of the incident light; a conversion step of obtaining time-varying characteristic data of a plurality of scattered electric fields or scattering intensities from a plurality of scattered light beams obtained in the measurement step; and a particle size distribution calculation step of obtaining a particle size distribution of the particles by using the time-varying characteristic data of the plurality of scattered electric fields or scattering intensities obtained in the conversion step.

An invention [5] relates to the optical measurement method according to the invention [4], in which the particle size distribution calculation step further includes: a step of obtaining an index value representing temperature dependence of the particle sizes of the particles by using the time-varying characteristic data of the plurality of scattered electric fields or scattering intensities; and a step of correcting the particle size distribution of the particles obtained in the particle size distribution calculation step by using the index value representing the temperature dependence of the particle sizes of the particles.

An invention [6] relates to the optical measurement method according to the invention [4], further comprising: a step of obtaining a second temperature after the particles at a first temperature have undergone a temperature rise due to light absorption of the incident light, in which, in the particle size distribution calculation step, the particle size distribution of the particles is obtained by using the second temperature for a diffusion coefficient obtained from the time-varying characteristic data of the plurality of scattered electric fields or scattering intensities.

An invention [7] relates to the optical measurement method according to any one of the inventions [1] to [6], in which the scattered light is scattered light obtained by causing the incident light to be incident while varying a value of at least any one of a scattering angle or a measurement wavelength among measurement parameters.

An invention [8] relates to the optical measurement method according to any one of the inventions [1] to [7], in which the measurement step is a step of measuring, a plurality of times, a scattering intensity of the scattered light obtained by causing the incident light to be incident on the dispersion liquid while varying the intensity of the incident light to obtain a plurality of scattering intensity data, and the conversion step is a step of acquiring the time-varying characteristic data of the plurality of scattered electric fields or scattering intensities from the plurality of scattering intensity data obtained in the measurement step.

An invention [9] relates to the optical measurement method according to the invention [7], in which the dispersion liquid contains a plurality of particle types, the optical measurement method further comprises: a conversion step of converting signals of a plurality of scattered light beams obtained in the measurement step into a plurality of time-averaged scattered electric field data or time-averaged scattering intensity data; and a calculation step of calculating a particle size or a particle size distribution for each of the plurality of particle types from the time-averaged scattered electric field data or the time-averaged scattering intensity data and the time-varying characteristic data.

An invention [10] relates to the optical measurement method according to the invention [9], in which the measurement step is a step of measuring, a plurality of times, a scattering intensity of the scattered light obtained by causing the incident light to be incident on the dispersion liquid while varying the intensity of the incident light to obtain a plurality of scattering intensity data and a step of measuring, a plurality of times, a scattering intensity of the scattered light obtained by causing the incident light to be incident while varying the value of at least any one of the scattering angle or the measurement wavelength among the measurement parameters to obtain a plurality of scattering intensity data, and the conversion step is a step of calculating the time-varying characteristic data of the plurality of scattered electric fields or scattering intensities from the plurality of scattering intensity data obtained in the measurement step.

An invention [11] relates to the optical measurement method according to any one of the inventions [1] to [10], in which the time-varying characteristic data of the scattered electric fields or the scattering intensities is an autocorrelation function or a power spectrum.

An invention [12] relates to an optical measurement device for a dispersion liquid containing particles, the optical measurement device comprising: a light source that causes incident light to be incident on the dispersion liquid while varying an intensity of the incident light; a measurement section that measures, a plurality of times, scattered light obtained by causing the incident light to be incident on the dispersion liquid while varying the intensity of the incident light; a conversion section that obtains time-varying characteristic data of a plurality of scattered electric fields or scattering intensities from a plurality of scattered light beams obtained by the measurement section; and a particle size calculation section that obtains particle sizes of the particles by using the time-varying characteristic data of the plurality of scattered electric fields or scattering intensities obtained by the conversion section.

An invention [13] relates to the optical measurement device according to the invention [12], in which the particle size calculation section obtains the particle sizes of the particles by analyzing the time-varying characteristic data of the plurality of scattered electric fields or scattering intensities on an assumption that diffusion coefficients of the particles have linear dependence on the intensity of the incident light, and obtains a relationship between the particle sizes of the particles or the diffusion coefficients of the particles and the intensity of the incident light.

An invention [14] relates to the optical measurement device according to the invention [12] or [13], in which the particle size calculation section obtains a second temperature after the particles at a first temperature have undergone a temperature rise due to light absorption of the incident light, and obtains particle sizes of the particles at the second temperature by using an expression representing a diffusion coefficient in a case in which the temperature rise occurs, for the particle sizes of the particles obtained in the particle size calculation section.

An invention [15] relates to an optical measurement device for a dispersion liquid containing particles, the optical measurement device comprising: a light source that causes incident light to be incident on the dispersion liquid while varying an intensity of the incident light; a measurement section that measures, a plurality of times, scattered light obtained by causing the incident light to be incident on the dispersion liquid while varying the intensity of the incident light; a conversion section that obtains time-varying characteristic data of a plurality of scattered electric fields or scattering intensities from a plurality of scattered light beams obtained by the measurement section; and a particle size distribution calculation section that obtains a particle size distribution of the particles by using the time-varying characteristic data of the plurality of scattered electric fields or scattering intensities obtained by the conversion section.

An invention [16] relates to the optical measurement device according to the invention [15], in which the particle size distribution calculation section obtains an index value representing temperature dependence of the particle sizes of the particles by using the time-varying characteristic data of the plurality of scattered electric fields or scattering intensities obtained by the conversion section, and corrects the particle size distribution of the particles by using the index value representing the temperature dependence of the particle sizes of the particles.

An invention [17] relates to the optical measurement device according to the invention [15], in which the particle size distribution calculation section obtains a second temperature after the particles at a first temperature have undergone a temperature rise due to light absorption of the incident light, and obtains the particle size distribution of the particles by using the second temperature for a diffusion coefficient obtained from the time-varying characteristic data of the plurality of scattered electric fields or scattering intensities.

An invention [18] relates to the optical measurement device according to any one of the inventions [12] to [17], in which the scattered light is scattered light obtained by causing the incident light to be incident while varying a value of at least any one of a scattering angle or a measurement wavelength among measurement parameters.

An invention [19] relates to the optical measurement device according to any one of the inventions [12] to [118], further comprising: a measurement unit that measures the intensity of the incident light.

An invention [20] relates to the optical measurement device according to any one of the inventions [12] to [19], further comprising: a low-coherence interferometer.

An invention [21] relates to the optical measurement device according to any one of the inventions [12] to [20], in which the measurement section is a section that measures, a plurality of times, a scattering intensity of the scattered light obtained by causing the incident light to be incident on the dispersion liquid while varying the intensity of the incident light to obtain a plurality of scattering intensity data, and the conversion section is a section that acquires the time-varying characteristic data of the plurality of scattered electric fields or scattering intensities from the plurality of scattering intensity data obtained by the measurement section.

An invention [22] relates to the optical measurement device according to any one of the inventions [12] to [24], in which the dispersion liquid contains a plurality of particle types, the conversion section converts signals of a plurality of scattered light beams obtained by the measurement section into a plurality of time-averaged scattered electric field data or time-averaged scattering intensity data, and the particle size calculation section calculates a particle size for each of the plurality of particle types from the time-averaged scattered electric field data or the time-averaged scattering intensity data and the time-varying characteristic data.

An invention [23] relates to the optical measurement device according to any one of the inventions [12] to [24], in which the dispersion liquid contains a plurality of particle types, the conversion section converts signals of a plurality of scattered light beams obtained by the measurement section into a plurality of time-averaged scattered electric field data or time-averaged scattering intensity data, and the particle size distribution calculation section calculates a particle size distribution for each of the plurality of particle types from the time-averaged scattered electric field data or the time-averaged scattering intensity data and the time-varying characteristic data.

An invention [24] relates to the optical measurement device according to the invention [22] or [23], in which the measurement section is a section that measures, a plurality of times, a scattering intensity of the scattered light obtained by causing the incident light to be incident on the dispersion liquid while varying the intensity of the incident light to obtain a plurality of scattering intensity data and measures, a plurality of times, a scattering intensity of the scattered light obtained by causing the incident light to be incident while varying the value of at least any one of the scattering angle or the measurement wavelength among the measurement parameters to obtain a plurality of scattering intensity data, and the conversion section is a step of calculating the time-varying characteristic data of the plurality of scattered electric fields or scattering intensities from the plurality of scattering intensity data obtained by the measurement section.

An invention [25] relates to the optical measurement device according to any one of the inventions [12] to [24], in which the time-varying characteristic data of the scattered electric fields or the scattering intensities is an autocorrelation function or a power spectrum.

According to the present invention, it is possible to provide the optical measurement method and the optical measurement device for accurately measuring the particle size and the particle size distribution of the particles contained in the dispersion liquid containing the particles having the property of absorbing light.

## BRIEF DESCRIPTION OF THE DRAWINGS

FIG. 1 is a graph illustrating dependence of an autocorrelation function on an intensity of incident light.

FIG. 2 is a graph illustrating a relationship between a diffusion coefficient of particles and an intensity of incident light.

FIG. 3 is a graph illustrating a relationship between reciprocals of particle sizes of a plurality of types of particles and the intensity of the incident light.

FIG. 4 is a graph illustrating a relationship between the diffusion coefficients of the particles and the intensities of the incident light for each wavelength of the incident light.

FIG. 5 is a graph illustrating an example of a power spectrum of the particles for each intensity of the incident light.

FIG. 6 is a graph illustrating a relationship between the reciprocals of the particle sizes of the particles and the intensities of the incident light.

FIG. 7 is a schematic diagram illustrating a first example of an optical measurement device according to an embodiment of the present invention.

FIG. 8 is a schematic diagram illustrating a second example of the optical measurement device according to the embodiment of the present invention.

FIG. 9 is a schematic diagram illustrating a third example of the optical measurement device according to the embodiment of the present invention.

FIG. 10 is a flowchart illustrating a fourth example of an optical measurement method of the embodiment of the present invention.

FIG. 11 is a histogram of a particle A.

FIG. 12 is a histogram of a particle B.

FIG. 13 is a flowchart illustrating a fifth example of the optical measurement method of the embodiment of the present invention.

FIG. 14 is a graph illustrating calculated values of a scattering angle and a scattering intensity of each refractive index of particles having the same particle size.

FIG. 15 is a graph illustrating an example of a relationship between a scattering intensity and a measurement wavelength.

FIG. 16 is a graph illustrating another example of the relationship between the scattering intensity and the measurement wavelength.

FIG. 17 is a flowchart illustrating a sixth example of the optical measurement method of the embodiment of the present invention.

## DESCRIPTION OF THE PREFERRED EMBODIMENTS

Hereinafter, an optical measurement method and an optical measurement device according to an embodiment of the present invention will be described in detail based on preferred embodiment illustrated in the accompanying drawings.

The drawings illustrated below are merely examples for describing the present invention, and the present invention is not limited to the drawings illustrated below.

Hereinafter, the expression "to" indicating a numerical range includes numerical values written on both sides of "to". For example, the expression "$\varepsilon$ is numerical value $\varepsilon_\alpha$ to numerical value $\varepsilon_\beta$" means that a range of $\varepsilon$ includes the numerical value $\varepsilon_\alpha$ and the numerical value $\varepsilon_\beta$ and is represented by $\varepsilon_\alpha \leq \varepsilon \leq \varepsilon_\beta$ in mathematical symbols.

The expression "angle represented by a specific numerical value", term "parallel" and the like include an error range generally allowed in the corresponding technical field unless otherwise noted.

In addition, the temperature also includes an error range generally allowed in the corresponding technical field unless otherwise noted.

(Measurement Principle for Optical Measurement)

First, a measurement principle for a particle size of particles will be described.

A method of measuring a diffusion coefficient of the particles and converting the diffusion coefficient into the particle size is known.

From the Stokes-Einstein expression given in the following expression (1), a particle size $d_0$ of the particles is quantitatively determined from a diffusion coefficient D of the particles. In the following expression (1), $k_B$ is a Boltzmann constant, $T_0$ is a temperature of a solvent, and $\eta_0$ is a viscosity of the solvent. In the following expression (1), the absorption of light by the particles is not taken into account. The solvent is a solvent in the dispersion liquid containing the particles.

Here, the absorption of light by the particles is the absorption of light incident on the particles into the particles. In a case in which the particles absorb light, a temperature of the particles may rise. Therefore, in a case in which the particles having a property of absorbing light absorb light, the temperature of the particles may rise. The term "light absorption" is used as the same meaning as "absorbing light" as described above.

$$D = \frac{k_B T_0}{3\pi \eta_0 d_0} \quad (1)$$

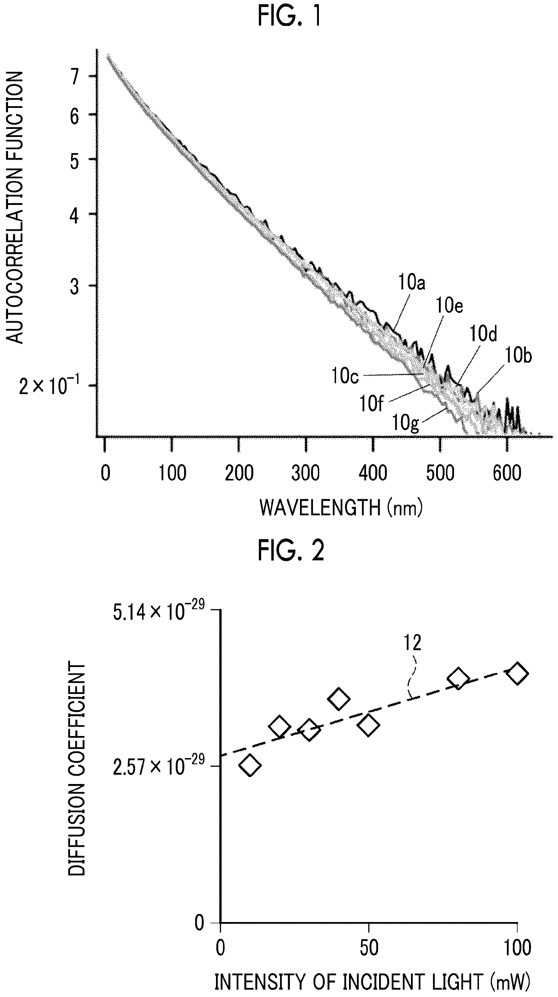

Here, in a case in which the absorption of light by the particles is taken into account, the particles having the property of absorbing light change an autocorrelation function obtained for each intensity of the incident light in dynamic light scattering measurement as illustrated in FIG. 1 in accordance with the intensity of the incident light.

FIG. 1 illustrates dependence of the autocorrelation function on an intensity of the incident light in an aqueous dispersion liquid of a yellow pigment. That is, the dependence of the autocorrelation function of the particles on the intensity of the incident light is illustrated. In FIG. 1, two types of yellow pigments having different particle sizes are used, and the yellow pigment is PY74 (C.I. Pigment Yellow 74). The solvent for the aqueous dispersion liquid of the yellow pigment described above is water. In addition, a measurement wavelength is 488 nm.

ND illustrated below represents an amount of incident light transmitted through a filter, ND50 represents that an amount of transmitted light is 50%, and ND100 represents that an amount of transmitted light is 100%.

Reference numeral 10a in FIG. 1 illustrates an autocorrelation function measured for the aqueous dispersion liquid of the yellow pigment under conditions of the intensity of the incident light of 20 mW and ND50. That is, an actual intensity of the incident light on the yellow pigment dispersed in the liquid is 10 mW.

Reference numeral 10b illustrates an autocorrelation function measured for the aqueous dispersion liquid of the yellow pigment under conditions of the intensity of the incident light of 40 mW and ND50. That is, an actual intensity of the incident light on the yellow pigment dispersed in the liquid is 20 mW.

Reference numeral 10c illustrates an autocorrelation function measured for the aqueous dispersion liquid of the yellow pigment under conditions of the intensity of the incident light of 60 mW and ND50. That is, an actual intensity of the incident light on the yellow pigment dispersed in the liquid is 30 mW.

Reference numeral 10d illustrates an autocorrelation function measured for the aqueous dispersion liquid of the yellow pigment under conditions of the intensity of the incident light of 80 mW and ND50. That is, an actual intensity of the incident light on the yellow pigment dispersed in the liquid is 40 mW.

Reference numeral 10e illustrates an autocorrelation function measured for the aqueous dispersion liquid of the yellow pigment under conditions of the intensity of the incident light of 100 mW and ND50. That is, an actual intensity of the incident light on the yellow pigment dispersed in the liquid is 50 mW.

Reference numeral 10f illustrates an autocorrelation function measured for the aqueous dispersion liquid of the yellow pigment under conditions of the intensity of the incident light of 80 mW and ND100. That is, an actual intensity of the incident light on the yellow pigment dispersed in the liquid is 80 mW.

Reference numeral 10g illustrates an autocorrelation function measured for the aqueous dispersion liquid of the yellow pigment under conditions of the intensity of the incident light of 100 mW and ND100. That is, an actual intensity of the incident light on the yellow pigment dispersed in the liquid is 100 mW.

The autocorrelation function of the scattering intensity is expressed by the following expression (2). In the following expression (2), q represents a scattering vector. Further, $\tau$ represents a time lag of the autocorrelation function.

The diffusion coefficient D and the scattering vector q have a relationship given in the following expression (2).

$$G_2(\tau) - 1 = \exp(-2Dq^2\tau) \ (2)$$

Further, the scattering vector q is a constant determined by a wavelength of the light source and a scattering angle. Therefore, the diffusion coefficient D can be obtained by fitting the exponential function $\exp(-2Dq^2\tau)$ to each graph of the autocorrelation functions illustrated by reference numerals 10a to 10g in FIG. 1, and the particle size $d_0$ can be obtained by using the expression (1).

For example, in a case in which the particles have a particle size, the expression (2) is represented by $G_2(\tau) - 1 = A_0 \cdot \exp(-2Dq^2\tau)$. In this case, as described above, the diffusion coefficient D can be obtained by fitting the exponential function $\exp(-2Dq^2\tau)$, and the particle size $d_0$ can be obtained by using the expression (1). Here, $A_0$ is a component corresponding to a ratio of a histogram described later.

As a result, the particle size of the particles can be obtained using time-varying characteristic data of a plurality of scattered electric fields or scattering intensities, for example, the autocorrelation function or the power spectrum, as described later.

Further, the diffusion coefficient D can also be obtained by fitting the exponential function $\exp(-2Dq^2\tau)$. As a result, the particle size d can be obtained from the obtained diffusion coefficient D by the expression (1). As described above, different particle sizes are obtained for each intensity of the incident light.

The method of fitting the exponential function $\exp(-2Dq^2\tau)$ is not particularly limited, and a known method can be used as appropriate.

Here, in a case in which a relationship between the diffusion coefficient of the particles obtained by analyzing the autocorrelation function and the intensity of the incident light is examined, the relationship is linear as illustrated in FIG. 2, for example, as represented by a straight line 12. That is, the dependence of the diffusion coefficient of the particles on the intensity of the incident light is linear. In this case, the particle size obtained from the diffusion coefficient of a value extrapolated to the intensity of the incident light of 0 (zero) on the straight line 12 is a particle size that does not depend on the intensity of the incident light. By using the fact that the dependence of the diffusion coefficient of the particles on the intensity of the incident light is linear, the particle size that does not depend on the intensity of the incident light can be obtained even for the particles having the property of absorbing light. This makes it possible to measure the particle size of the particles contained in the dispersion liquid containing the particles having the property of absorbing light with high accuracy.

The extrapolation method of extrapolating the intensity of the incident light to 0 is not limited to linear. The extrapolation can be performed by fitting any function even in a case in which the extrapolation method is non-linear.

The relationship between the diffusion coefficient of the particles obtained by analyzing the autocorrelation function and the intensity of the incident light is also established for particles of other colors in addition to those illustrated in FIG. 2.

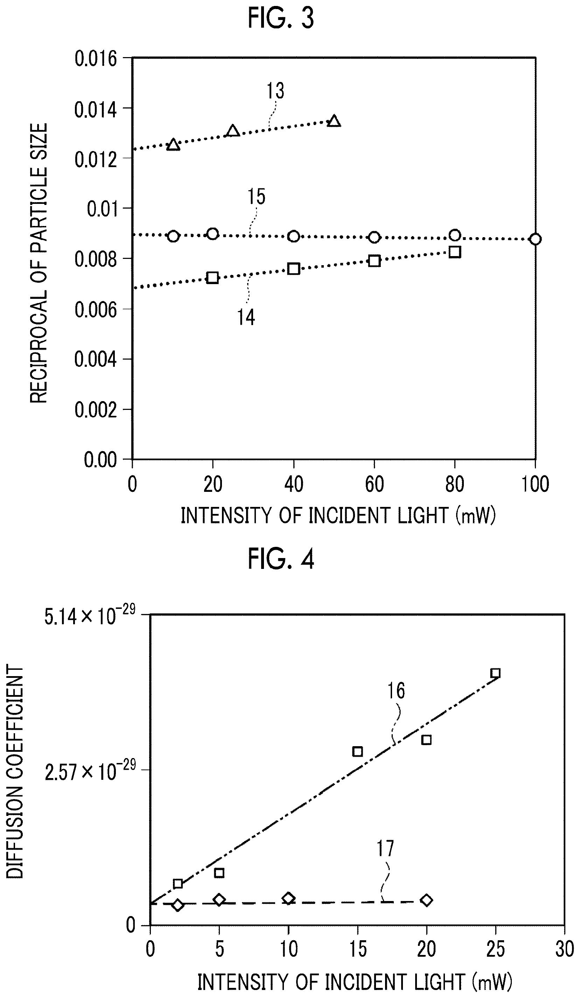

In addition, in the above-described analysis example, the diffusion coefficient is used, but even in a case of using the reciprocal of the particle size of the particles instead of the diffusion coefficient, the relationship between the reciprocal of the particle size of the particles and the intensity of the incident light is established in the same manner as the diffusion coefficient. Specifically, for example, the relationship between the reciprocal of the particle size of the particles and the intensity of the incident light is established as in a straight line 13 and a straight line 14 illustrated in FIG. 3. In FIG. 2, a vertical axis represents the diffusion coefficient, but in FIG. 3, a vertical axis represents the reciprocal of the particle size.

On the other hand, in a case of particles having small light absorption, for example, particles transparent to light having a wavelength of the incident light of the particles, the dependence on the intensity of the incident light is extremely small as in a straight line 15 illustrated in FIG. 3. Therefore, a difference between the particle size obtained by extrapolating the intensity of the incident light to 0 (zero) and the particle size obtained in a case in which the intensity of the incident light is larger than 0 is extremely small. Therefore, for the particles having small light absorption, it is not necessary to obtain the particle size by extrapolating the intensity of the incident light to 0 (zero).

Here, in a case in which a complex refractive index of a material constituting the particles is expressed by $N \equiv n + ik$, the particles are transparent in a case of $k = 0$. That is, the transparent particle is a particle in which $k = 0$ in $N \equiv n + ik$.

In the expression $N \equiv n + ik$ representing the complex refractive index, i represents an imaginary number. The real part n of the complex refractive index is a so-called refractive index. The imaginary part k of the complex refractive index is called an extinction coefficient representing the absorption.

Even in a case of $k \approx 0$, which is not strictly $k = 0$, but depends on the irradiation light intensity, the particles can also be treated as substantially transparent particles.

The straight line 13 indicates a result in a dispersion liquid of a red pigment in which PR254 (C.I. Pigment Red 254) is used as the red pigment.

The straight line 14 indicates a result in a dispersion liquid of a red pigment in which PR272 (C.I. Pigment Red 272) is used as the red pigment. The measurement wavelength for the straight line 13 and the straight line 14 is 488 nm.

The straight line 15 indicates a result in a dispersion liquid in which polystyrene particles having a particle size of 100 nm are used. The polystyrene particles are particles having small light absorption, and Nanobead NIST Traceable Particle Size Standard, 100nm is used. The solvent of the dispersion liquid described above is water. The measurement wavelength for the straight line 15 is 488 nm.

Even in a case in which the measurement is performed by changing the wavelength of the incident light in the dispersion liquid containing the same particles, as illustrated in FIG. 4, the particle size can be obtained from the diffusion coefficient of a value extrapolated to the intensity of the incident light of 0 (zero) regardless of the wavelength of the incident light.

FIG. 4 is a graph illustrating the relationship between the diffusion coefficient of the particles and the intensity of the incident light for each wavelength of the incident light.

In FIG. 4, a straight line 16 indicates a result in which the wavelength of the incident light is 488 nm. The straight line 17 indicates a result in which the wavelength of the incident light is 633 nm.

The result is a result in a dispersion liquid of a yellow pigment in which PY74 (C.I. Pigment Yellow 74) is used as the yellow pigment. The solvent for the dispersion liquid of the yellow pigment described above is water.

The above description is an example of analysis using the autocorrelation function in a particle dispersion system with a low concentration, for example, 0.1 to 0.001% by volume. In the above-described analysis example, the diffusion coefficient is used, but as illustrated in FIG. 3, even in a case of using the reciprocal of the particle size of the particles instead of the diffusion coefficient, the particle size that does not depend on the intensity of the incident light can be obtained by extrapolating the value of the reciprocal of the particle size of the particles to the intensity of the incident light of 0 (zero).

In the above description, the autocorrelation function is used, but even in a case of the particle dispersion system with a high concentration of, for example, 1 to 20% by volume, using the power spectrum, the particle size that does not depend on the intensity of the incident light can be obtained by extrapolating the intensity of the incident light to 0 (zero) in the same manner as the above-described autocorrelation function.

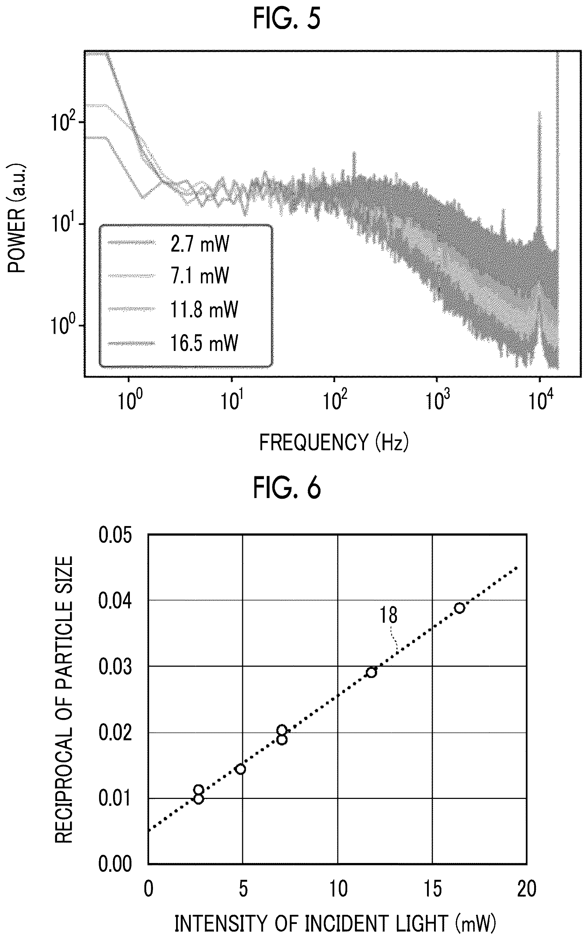

As illustrated in FIG. 5, the power spectrum differs for each intensity of the incident light. The power spectrum also has dependence on the intensity of the incident light. FIG. 5 illustrates a result of measuring a dispersion liquid of a blue pigment. The blue pigment is PB15:6 (C.I. Pigment Blue 15:6).

The autocorrelation function can be obtained by performing an inverse Fourier transform on the power spectrum. The diffusion coefficient can be obtained from the autocorrelation function as described above, and the particle size can be obtained from the diffusion coefficient.

For example, as illustrated in FIG. 6, there is a linear relationship between the reciprocal of the particle size of the particles obtained by analyzing the power spectrum and the intensity of the incident light. The diffusion coefficient of the particles obtained by analyzing the power spectrum and the intensity of the incident light are represented by a straight line 18 illustrated in FIG. 6. In FIG. 6, a vertical axis represents the reciprocal of the particle size of the particles, but as described above, even in a case in which a vertical axis represents the diffusion coefficient, there is a linear relationship between the diffusion coefficient and the intensity of the incident light.

Therefore, even in a case of using the power spectrum, the particle size that does not depend on the intensity of the incident light can be obtained from the diffusion coefficient of the value extrapolated to the intensity of the incident light of 0 (zero) in the same manner as the result of the analysis by low-coherence dynamic light scattering (LC-DLS), even for the particles having the property of absorbing light.

For example, the particle dispersion system with a high concentration of 1 to 20% by volume can be measured by low-coherence dynamic light scattering (LC-DLS). In the low-coherence dynamic light scattering, the diffusion coefficient is obtained by fitting a theoretical expression to the power spectrum. Further, the diffusion coefficient can also be obtained by performing an inverse Fourier transform on the power spectrum to obtain the autocorrelation function and then fitting the theoretical expression.

Next, a case will be described in which the particles absorb light and the temperature rises.

A diffusion coefficient $D'$ in a case in which the system is in equilibrium with a local temperature rise in the vicinity of the particles due to the light absorption is expressed by the following expression (3). $T'$ in the following expression (3) is a temperature of the solvent after the light absorption, and $\eta'$ in the following expression (3) is a viscosity of the solvent at the temperature $T'$. In this case, it is assumed that the temperature rise is localized only in the vicinity of the particles and the temperature cannot be detected by a thermometer attached to the device. In this case, the thermometer attached to the device indicates a temperature $T_0$. In a case in which the particle size measured by using the dynamic light scattering method (DLS) is denoted by an apparent particle size $d'$, a relational expression between the particle size $d'$ and the above-described diffusion coefficient D' is expressed by the following expression (4). Therefore, the following expression (5) is obtained from the expressions (2) and (3).

$$D' = \frac{k_B T'}{3\pi\eta' d_0} \quad (3)$$

$$D' = \frac{k_B T_0}{3\pi\eta_0 d'} \quad (4)$$

$$\frac{d_0}{d'} = \frac{\eta_0 T'}{\eta' T_0} \quad (5)$$

Here, in a case in which the temperature rise in the vicinity of the particles due to the light absorption is denoted by $\Delta T$, the temperature rise is expressed by the following expression (6).

$$T' = T_0 + \Delta T \quad (6)$$

Then, in a case in which the following expression (7) is established between the intensity I of the incident light and the temperature rise $\Delta T$ of the particles due to the light absorption, in a case in which the expression (5) and the expression (6) are substituted into the expression (4), the following expression (8) is obtained.

$$\Delta T = \alpha \cdot I \quad (7)$$

$$\frac{d_0}{d'} = \frac{\eta_0}{\eta'}\left(1 + \frac{\Delta T}{T_0}\right) = \frac{\eta_0}{\eta'}\left(1 + \frac{\alpha}{T_0} I\right) \quad (8)$$

It is assumed that a relationship between the viscosity of the solvent and the temperature of the solvent is expressed by the following expression (9) by the Andrade expression. In the following expression (9), B is a proportional constant, E is a flow activation energy, and R is a gas constant.

$$\eta = B \exp\left(\frac{E}{RT}\right) \quad (9)$$

Here, the following expression (10) is defined for $1/\eta'$. Then, in a case in which the Taylor expansion is performed on the following expression (10) for the temperature, the following expression (11) is obtained. Then, in a case in which the following expression (10) is substituted into the expression (7), the following expression (12) is obtained.

$$F \equiv \frac{1}{\eta'} = B^{-1} \exp\left(-\frac{E}{RT}\right) \quad (10)$$

$$F = F(T_0) + F'(T_0)(T' - T_0) + \cdots = B^{-1}\exp\left(-\frac{E}{RT_0}\right) +$$

$$B^{-1}\left(\frac{E}{RT_0^2}\right)\exp\left(-\frac{E}{RT_0}\right)\Delta T + \cdots \quad (11)$$

$$\frac{d_0}{d'} = \left(1 + \frac{E\Delta T}{RT_0^2}\right) \cdot \left(1 + \frac{\Delta T}{T_0}\right) + \cdots = 1 + \frac{1}{T_0}\left(1 + \frac{E}{RT_0}\right)\Delta T +$$

$$\cdots = 1 + \frac{\alpha}{T_0}\left(1 + \frac{E}{RT_0}\right)I + \cdots \quad (12)$$

Here, in the expression (12), in a case in which $\Delta T < T_0$, the reciprocal of the particle size is linear with respect to the intensity I of the incident light. In this case, the following expression (13) is obtained. In the following expression (13), in a case of treating only the linear term, the following expression is obtained, which further becomes the following expression (14).

$$\frac{1}{d'} = \frac{1}{d_0} + \frac{1}{d_0} \cdot \frac{\alpha}{T_0}\left(1 + \frac{E}{RT_0}\right) \cdot I + \cdots \quad (13)$$

$$\frac{d_0}{d'} = 1 + \frac{\alpha}{T_0}\left(1 + \frac{E}{RT_0}\right) \cdot I$$

$$\frac{d_0}{d'} \cong 1 + \frac{1}{T_0}\left(1 + \frac{E}{RT_0}\right)\Delta T \quad (14)$$

A term of the expression (12) proportional to the intensity I of the incident light is defined as $\beta$, and $\beta$ is defined as in the following expression (15). In this case, 1/d' can be expressed by the following expression (16). In a case in which the following expression (16) is solved for $d_0$, the following expression (17) is obtained.

$$\beta \equiv \frac{\alpha}{T_0}\left(1 + \frac{E}{RT_0}\right) \quad (15)$$

$$\frac{1}{d'} = \frac{1}{d_0} + \frac{\beta}{d_0} \cdot I \quad (16)$$

In addition, in a case in which the expression (16) is multiplied by $kBT/(3\pi\eta)$, the following expression (16-1) is obtained. In the expression (16-1), D' and $D_0$ are diffusion coefficients.

$$D' = D_0 + \beta D_0 \cdot I \quad (16\text{-}1)$$

$$d_0 = (1 + \beta) \cdot I \cdot d' \quad (17)$$

From the expression (16-1), it can be seen that a slope of the straight line 12 illustrating the intensity dependence of the incident light illustrated in FIG. 2 is $\beta D_0$, and an intercept of the straight line 12 is the diffusion coefficient $D_0$. Therefore, $\beta$ can be obtained from $\beta D_0$ representing the slope and the intercept, that is, the diffusion coefficient $D_0$. The diffusion coefficient $D_0$ can be obtained from the expression (16-1) using the intensity I of the incident light and the diffusion coefficient D' at the intensity I of the incident light, and the particle size $d_0$ can be obtained from the expression (1). The above-described $\beta$ is an index value representing the temperature dependence of the particle size of the particles.

The particle size d' at the intensity I of the incident light can also be obtained from the expression (4) using the diffusion coefficient D'.

In a case in which a vertical axis of FIG. 2 is the reciprocal of the particle size, for example, in FIG. 3, it can be seen that the slope of the straight line 12 illustrating the intensity dependence of the incident light is $\beta/d_0$ from the expression (16), and the intercept of the straight line 12 is the particle size $d_0$. Therefore, $\beta$ can be obtained from $\beta/d_0$ representing the slope

and the intercept, that is, the particle size $d_0$. The particle size $d_0$ can be obtained from the expression (16) using the intensity I of the incident light and the particle size d' at the intensity I of the incident light. The above-described $\beta$ is an index value representing the temperature dependence of the particle size of the particles.

The particle size d' at the intensity I of the incident light can also be obtained from the expression (4) using the diffusion coefficient D'.

In addition, in a case in which the particle size d' and the particle size $d_0$ at any intensity I of the incident light are known from the expression (14) and FIG. 2, the constant E/R related to the viscosity of the solvent and the temperature $T_0$ are known, and thus the temperature rise $\Delta T$ at each intensity of the incident light is obtained. As a result, the intensity I of the incident light and a proportional coefficient $\alpha$ of the temperature rise $\Delta T$ in the expression (7) are obtained, and the true temperature $T' = T_0 + \Delta T$ during the measurement is known. In this case, the particle size $d_0$ is obtained from the expression (3) by measuring the particle size at any intensity of the incident light. It is assumed that the dependence of the viscosity of the solvent on the temperature is known. This also makes it possible to measure the particle sizes of the particles contained in the dispersion liquid containing the particles having the property of absorbing light with high accuracy.

The above is a description in a case of monodisperse particles. The above-described method can also be applied to particles having a particle size distribution P(d). A procedure thereof will be described below.

In a case of having the particle size distribution P(d), the expression (2) is expressed by the following expression (18). The left side of the following expression (18) is a sum of the particle size d between 0 and $\infty$. A(d) is a frequency distribution of a component of the particle size d, and $\Sigma A(d)$ represents the particle size distribution of the particles. Further, D(d) is a diffusion coefficient of the particle size d. A relationship between the diffusion coefficient D(d) and the particle size d is expressed by the expression (1).

$$G_2\,(\tau) - 1 = \sum A(d)\,exp(-2q^2 D(d)\tau) \quad (18)$$

In a case in which the particles have the particle size distribution, the particle size distribution A(d) can be obtained by fitting the exponential function $exp(-2Dq^2\tau)$ as described above.

An average value of the particle size distribution A(d) is, for example, an average value based on the scattering intensity, and is an average particle size of the particles. Therefore, the average value of the particle size distribution A(d) is plotted against the intensity I of the incident light as illustrated in FIG. 2 on the assumption that the dependence of the diffusion coefficient of the particles on the intensity of the incident light is linear. As a result, a straight line illustrating the dependence on the intensity of the incident light with respect to the average particle size of the particles is obtained. The slope of the straight line illustrating the dependence on the intensity of the incident light is $\beta/d_0$, and the particle size at the intensity of the incident light of 0 (zero) is $d_0$. Here, $d_0$ corresponds to the intercept of the straight line. In addition, $\beta$ can be obtained from $\beta/d_0$ representing the slope and $d_0$ as the intercept.

Then, the particle size distribution A(d) is converted into a particle size distribution $A(d_0)$ by using the expression (17) for the obtained particle size distribution A(d), whereby the particle size distribution $A(d_0)$ in which the dependence on the intensity of the incident light is taken into account can be obtained. This makes it possible to measure the particle size distribution of the particles contained in the dispersion liquid containing the particles having the property of absorbing light with high accuracy.

In a case of fitting the expression (18) to the graph of the autocorrelation function of FIG. 1 as described above, any graph of the autocorrelation function of FIG. 1 may be used. In a case in which the particle size distribution A(d) is converted into the particle size distribution $A(d_0)$ by using the expression (17) represented by $d_0 = (1 + \beta)\cdot I\cdot d'$, the intensity of the incident light of the graph (see FIG. 1) of the autocorrelation function used for the fitting is defined as I of the expression (17).

In addition, as described above, in a case in which the particle size d' and the particle size $d_0$ at any intensity I of the incident light are known from the expression (14) and FIG. 2, the above-described method can be applied to the particles having the particle size distribution P(d). In this case, for example, the expression (18) is fitted to the graph of the autocorrelation function of FIG. 1 as described above. Then, in a case of obtaining the particle size from the diffusion coefficient D, as illustrated in the expression (3), the particle size distribution $A(d_0)$ in which the influence of the incident light is taken into account is obtained by using the temperature T' and the viscosity $\eta'$ of the solvent at the temperature T'. This also makes it possible to measure the particle size distribution of the particles contained in the dispersion liquid containing the particles having the property of absorbing light with high accuracy.

The Andrade expression in the derivation of the above-described expressions is merely an example, and is not limited to the Andrade expression. In a case in which the dependence of the viscosity of the solvent or the dispersion system on the temperature is known, the particle size can be obtained in the same manner as in a case of using the Andrade expression.

(First Example of Optical Measurement Device)

Hereinafter, the optical measurement device used in the optical measurement method will be described.

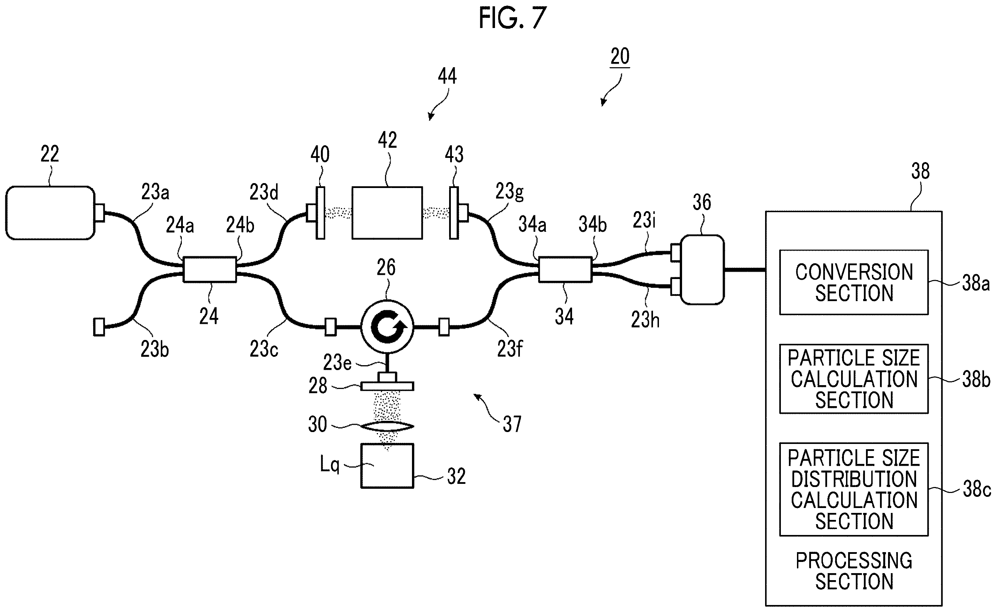

FIG. 7 is a schematic diagram illustrating a first example of the optical measurement device according to the embodiment of the present invention.

An optical measurement device 20 illustrated in FIG. 7 is an optical measurement device using a low-coherence dynamic light scattering method (LC-DLS). The optical measurement device 20 uses a Mach-Zehnder type interferometer.

The optical measurement device 20 includes a light source 22, a first coupler 24, a circulator 26, a collimating lens 28, an objective lens 30, a sample cell 32 that contains a dispersion liquid Lq containing particles, a second coupler 34, a detector 36, and a processing section 38.

Further, the optical measurement device 20 includes a first collimating lens 40, a modulator 42, and a second collimating lens 43. The first collimating lens 40, the modulator 42, and the second collimating lens 43 constitute a phase modulation section 44.

The light source 22 has a function of causing the incident light (not illustrated) to be incident on the dispersion liquid while varying an intensity Lq of the sample cell 32. The light source 22 emits, for example, low-coherence light. The low-coherence light is light having a bandwidth, unlike monochromatic laser light. For the light source 22, for example, a xenon lamp, a superluminescent diode (SLD), a light emitting diode (LED), or a supercontinuum (SC) light source may be used.

The first coupler 24 splits the light emitted from the light source 22, and has a plurality of input/output ports. For example, the first coupler 24 has a two-input and two-output configuration in which light is input at an end face 24a and output from an end face 24b.

It is preferable that the first coupler 24 can change the light splitting ratio depending on the measurement target.

The light source 22 and the end face 24a of the first coupler 24 are connected by an optical fiber 23a. In addition, the optical fiber 23b is connected to the end face 24a of the first coupler 24, but the optical fiber 23b is not connected to the first coupler 24 or the like.

The light emitted from the light source 22 is split and emitted to the optical fiber 23c and the optical fiber 23d connected to the end face 24b by the first coupler 24.

The first coupler 24 splits the light emitted from the light source 22, for example, with an intensity ratio of 99:1, and outputs the light to the optical fiber 23c and the optical fiber 23d. The splitting ratio of the light from the light source 22, in terms of intensity, is, for example, such that 99% of the light is output to optical fiber 23c and 1% of the light is output to optical fiber 23d. The light from the optical fiber 23c is incident light on the dispersion liquid Lq, and the light from the optical fiber 23d is reference light.

The first coupler 24 is connected to the circulator 26 by the optical fiber 23c. The circulator 26 is connected to the optical fiber 23c and an optical fiber 23f.

The circulator 26 is an optical path conversion device that guides the light from the optical fiber 23c to the optical fiber 23e and guides the incident light from the optical fiber 23e to the optical fiber 23f. For example, a known circulator used in a dynamic light scattering measurement device can be used as appropriate for the circulator 26.

The optical fiber 23e is connected to the collimating lens 28. The objective lens 30 is arranged on an exit side of the collimating lens 28. The sample cell 32 is arranged on the side of the objective lens 30 opposite to the collimating lens 28.

The collimating lens 28 converts the light from the optical fiber 23e into the parallel light. The objective lens 30 focuses the incident light that has passed through the collimating lens 28 via the optical fiber 23e, and irradiates the dispersion liquid Lq with the focused light. That is, the objective lens 30 irradiates the dispersion liquid Lq with the incident light emitted from the light source 22.

The light emitted from the light source 22 is incident on the dispersion liquid Lq as the incident light via the optical fiber 23a, the first coupler 24, the optical fiber 23c, the circulator 26, the optical fiber 23e, the collimating lens 28, and the objective lens 30. In such a case, scattered light is generated in the dispersion liquid Lq.

The scattered light generated in the dispersion liquid Lq passes, in order, through the objective lens 30, the collimating lens 28, the optical fiber 23e, and the circulator 26, and is guided to the optical fiber 23f. The optical fiber 23f is connected to the second coupler 34.

The objective lens 30 focuses the incident light onto the dispersion liquid Lq and also collects the scattered light generated in the dispersion liquid Lq by the incident light. The magnification of the objective lens 30 is not particularly limited, and, for example, a 10x objective lens is used. The objective lens 30 is not always required, and the optical measurement device 20 may have a configuration without the objective lens 30.

Further, it is preferable to provide a wavelength filter for cutting fluorescence generated in the dispersion liquid Lq (sample) on the optical fiber 23f.

The second coupler 34 couples the input light, and has a plurality of input/output ports. For example, the second coupler 34 has a two-input and two-output configuration in which light is input at an end face 34a and output from an end face 34b. The optical fiber 23f and an optical fiber 23g are connected to the end face 34a. An optical fiber 23h and an optical fiber 23i are connected to the end face 34b. The optical fiber 23h and the optical fiber 23i are connected to the detector 36.

The optical fiber 23d, which is connected to the first coupler 24, is connected to the first collimating lens 40. The first collimating lens 40, the modulator 42, and the second collimating lens 43 are arranged in this order. The second collimating lens 43 and the second coupler 34 are connected by the optical fiber 23g.

The first collimating lens 40 and the second collimating lens 43 convert the incident light into the parallel light.

The modulator 42 performs phase modulation, and, for example, an electro-optic modulator (EOM) is used.

The light converted into the parallel light by the first collimating lens 40 is incident on the modulator 42, is phase-modulated by the modulator 42, is converted into the parallel light by the second collimating lens 43, and is emitted to the optical fiber 23g. The reference light is obtained by the first collimating lens 40, the modulator 42, and the second collimating lens 43, that is, by the phase modulation section 44.

The scattered light is input to the second coupler 34 via the optical fiber 23f. The reference light is input to the second coupler 34 via the optical fiber 23g. In the second coupler 34, the reference light and the scattered light are made to interfere with each other. The second coupler 34 splits the interference light obtained by the interference, for example, with an intensity ratio of 1:1, and outputs the two light beams to the detector 36. It is preferable that the second coupler 34 can change the light splitting ratio depending on the measurement target.

The detector 36 is connected to the processing section 38. Differential light between the two light beams obtained by the detector 36 is output to the processing section 38. For example, a balanced detector is used as the detector 36. The first coupler 24, the circulator 26, the collimating lens 28, the objective lens 30, the second coupler 34, the detector 36, and the optical fibers 23a to 23i constitute a measurement section 37.

The configuration of the optical fibers 23a to 23i is not particularly limited as long as the light can be transmitted, and known optical fibers can be used as appropriate.

The detector 36 takes a difference between the two light beams output from the second coupler 34. As a result, the common-mode noise is removed, and the signal of the scattered light including an interference component is obtained. The detector 36 converts the signal of the scattered light of the difference between the two light beams into an electrical signal, and outputs the signal of the scattered light of the difference between the two light beams converted into the electrical signal to the processing section 38. In this way, the signal of the scattered light is obtained by the detector 36, that is, by the measurement section 37, and the scattering intensity data is obtained. The scattering intensity data is data representing the scattering intensity of the scattered light.

In the optical measurement device 20, the scattered light obtained by causing the incident light to be incident on the dispersion liquid while varying an intensity $Lq$ is measured a plurality of times, and the scattering intensity data is obtained by the measurement section 37 for each measurement. As a result, a plurality of scattering intensity data are obtained by the measurement section 37.

The processing section 38 performs data processing and analysis.

The processing section 38 converts the plurality of scattering intensity data into the time-varying characteristic data of the plurality of scattered electric fields or scattering intensities. Then, the particle size of the particles is obtained using the obtained time-varying characteristic data of the plurality of scattered electric fields or scattering intensities.

In addition, the processing section 38 obtains the particle size distribution of the particles using the obtained time-varying characteristic data of the plurality of scattered electric fields or scattering intensities.

The processing section 38 includes a conversion section 38a that converts the plurality of scattering intensity data output from the detector 36 as described above into the time-varying characteristic data of the plurality of scattered electric fields or scattering intensities.

In this way, the signals of the scattered light measured a plurality of times are obtained, and the plurality of scattering intensity data are converted to obtain the time-varying characteristic data of the plurality of scattered electric fields or scattering intensities.

Specifically, in the conversion section 38a of the processing section 38, the scattering intensity data is converted into the time-varying characteristic data of the plurality of scattered electric fields or scattering intensities. The time-varying characteristic data of the scattered electric fields or the scattering intensities is, for example, an autocorrelation function or a power spectrum.

The autocorrelation function is calculated from the scattering intensity data of the scattering intensity of the dispersion liquid by a known method. In addition, the power spectrum is also calculated from the scattering intensity data of the scattering intensity of the dispersion liquid by a known method.

The processing section 38 includes a particle size calculation section 38b that obtains the particle size of the particles using the time-varying characteristic data of the plurality of scattered electric fields or scattering intensities obtained by the conversion section 38a.

In the particle size calculation section 38b, as illustrated in FIG. 1, the particle size is obtained by acquiring the autocorrelation function for each intensity of the incident light, and fitting the exponential function $\exp(-2Dq^2\tau)$. The diffusion coefficient D is obtained by the fitting described above, and the particle size is obtained from the diffusion coefficient D.

In addition, in the particle size calculation section 38b, as illustrated in FIG. 2, the particle size can be obtained on the assumption that the dependence of the diffusion coefficient of the particles on the intensity of the incident light is linear. In this case, the particle size calculation section 38b analyzes a plurality of autocorrelation functions to obtain a plurality of diffusion coefficients for the particles. Then, the relationship between the diffusion coefficient of the particles and the intensity of the incident light is obtained as illustrated in FIG. 2. Next, the particle size is obtained by obtaining the diffusion coefficient of the value extrapolated to the intensity of the incident light of 0 (zero). The particle size that does not depend on the intensity of the incident light is obtained in this way. This makes it possible to measure the particle sizes of the particles contained in the dispersion liquid containing the particles having the property of absorbing light with high accuracy.

In addition, the particle size calculation section 38b can obtain the particle size of the particles at a second temperature after the temperature of the particles at a first temperature rises due to light absorption of the incident light, and obtain the particle size of the particles at the second temperature by using an expression representing the diffusion coefficient in a case in which the temperature rise occurs, for the particle size of the particles obtained by the particle size calculation section 38b.

Here, the first temperature is a temperature before the temperature rises due to the light absorption. For example, in a case in which the particles are dispersed in the dispersion liquid Lq, the first temperature is a temperature of the dispersion liquid Lq before the light absorption.

Specifically, the second temperature after the temperature rises due to the light absorption of the incident light is obtained by a thermometer or the like.

In this case, as described above, in a case in which the particle size d' and the particle size $d_0$ at any intensity I of the incident light are known, since the constant E/R related to the viscosity of the solvent and the temperature $T_0$ are known, the temperature rise $\Delta T$ at each intensity of the incident light is obtained. As a result, the intensity I of the incident light and the proportional coefficient $\alpha$ of the temperature rise $\Delta T$ in the expression (7) can be obtained, and the true temperature T' = $T_0 + \Delta T$ during the measurement is obtained. The temperature $T_0$ is the first temperature, and the temperature T' is the second temperature. The expression representing the diffusion coefficient in a case in which the temperature rise occurs is the expression (3). In this case, the particle size at the second temperature, for example, the particle size at the temperature T' can be obtained from the expression (3) by measuring the particle size at any intensity of the incident light.

The processing section 38 includes a particle size distribution calculation section 38c that obtains the particle size distribution of the particles using the time-varying characteristic data of the plurality of scattered electric fields or scattering intensities obtained by the conversion section 38a.

The above expression (18) represents a relationship between the autocorrelation function and the exponential function $\exp(-2Dq^2\tau)$ including the particle size distribution A(d) of the particle size d. In the particle size distribution calculation section 38c, the particle size distribution A(d) of the particles can be obtained by fitting the exponential function $\exp(-2Dq^2\tau)$ to the autocorrelation function. Further, the particle size distribution $A(d_0)$ of the particles can be obtained. The fitting and the method of obtaining the particle size distribution $A(d_0)$ of the particles are as described above. This makes it possible to measure the particle size distribution of the particles contained in the dispersion liquid containing the particles having the property of absorbing light with high accuracy.

The particle size distribution calculation section 38c may obtain an index value representing the temperature dependence of the particle size of the particles using the time-varying characteristic data of the plurality of scattered electric fields or scattering intensities obtained by the conversion section 38a, and correct the particle size distribution of the particles using the index value representing the temperature dependence of the particle size of the particles.

The index value representing the temperature dependence of the particle size of the particles is $\beta$ defined by the expression (15).

The particle size distribution calculation section 38c obtains the particle size distribution A(d) by fitting the expression (18) to the graph of the autocorrelation function of FIG. 1 as described above. Then, for the obtained particle size distribution A(d), the expression expressed by $d_0 = (1 + \beta) \cdot I \cdot d$ is used, similar to the expression (17), and the intensity of the incident light in the graph (see FIG. 1) of the autocorrelation function used for fitting is set as I in the expression expressed by $d_0 = (1 + \beta) \cdot I \cdot d$, and the obtained particle size distribution A(d) is corrected to $A(d_0)$. As a result, the particle size distribution $A(d_0)$ in which the dependence on the intensity of the incident light is taken into account is obtained.

The graph of the autocorrelation function of FIG. 1 can be obtained by calculating the autocorrelation function for each intensity of the incident light for the particles having the particle size distribution.

In addition, the particle size distribution calculation section 38c can obtain a particle size distribution of the particles by obtaining a second temperature after the temperature of the particles at a first temperature rises due to the light absorption of the incident light, and using the second temperature for the diffusion coefficient obtained from the time-varying characteristic data of the plurality of scattered electric fields or scattering intensities.

In this case, the particle size distribution is obtained by fitting the expression (18) to the graph of the autocorrelation function of FIG. 1 as described above. In this case, in a case of obtaining the particle size from the diffusion coefficient D, as illustrated in the expression (3), the temperature T', that is, the second temperature and the

viscosity $\eta'$ of the solvent at the temperature T' are used. As a result, the particle size distribution $A(d_0)$ in which the influence of the incident light is taken into account is obtained.

The processing section 38 executes a program (computer software) stored in a read only memory (ROM) or the like to obtain the particle size distribution of the particles as described above. The processing section 38 may be configured by a computer in which each section functions by executing the program as described above, may be a dedicated device in which each section is configured by a dedicated circuit, or may be configured by a server to be executed on the cloud.

The computer, the dedicated device, and the server described above include, for example, a processor. The processor may be configured by one or more hardware components, and the types of hardware are not limited. For example, the processor may be composed of hardware such as a central processing unit (CPU), a micro processing unit (MPU), a programmable logic device such as a field programmable gate array (FPGA), a dedicated circuit for executing specific processing, such as an application specific integrated circuit (ASIC), a graphics processing unit (GPU), or a neural processing unit (NPU). The processor includes each unit or each means that executes various types of processes in the present embodiment. Further, the type of hardware may be a combination of different types of hardware components. In a case in which the plurality of types of hardware components are configured to execute one or a plurality of processes of a certain processor, the plurality of types of hardware components may be present in devices physically separated from each other or may be present in the same device. Further, in any of the embodiments, the order of each process performed by the processor is not limited to the order described above, and may be changed as appropriate. In addition, the hardware is implemented in a form of an electric circuit (circuitry) in which circuit elements such as semiconductor elements are combined.

The sample cell 32 is, for example, a rectangular parallelepiped or columnar container made of optical glass or optical plastic. The dispersion liquid Lq as the measurement target including particles is contained in the sample cell 32. The dispersion liquid Lq is irradiated with the incident light.

The sample cell 32 may be arranged inside an immersion bath (not illustrated). The immersion bath is used for removing a difference in refractive index with the surrounding environment or for making the temperature uniform. A known immersion bath can be used as appropriate as the immersion bath. Further, the temperature of the sample cell 32 can be adjusted by bringing the sample cell 32 into contact with a metal in contact with a Peltier element.

As described above, the optical measurement device 20 measures, a plurality of times, the scattered light generated by scattering the incident light from the light source 22 in the dispersion liquid Lq while varying the intensity of the incident light. The intensity of the incident light is one of the measurement parameters.

(Second Example of Optical Measurement Device)

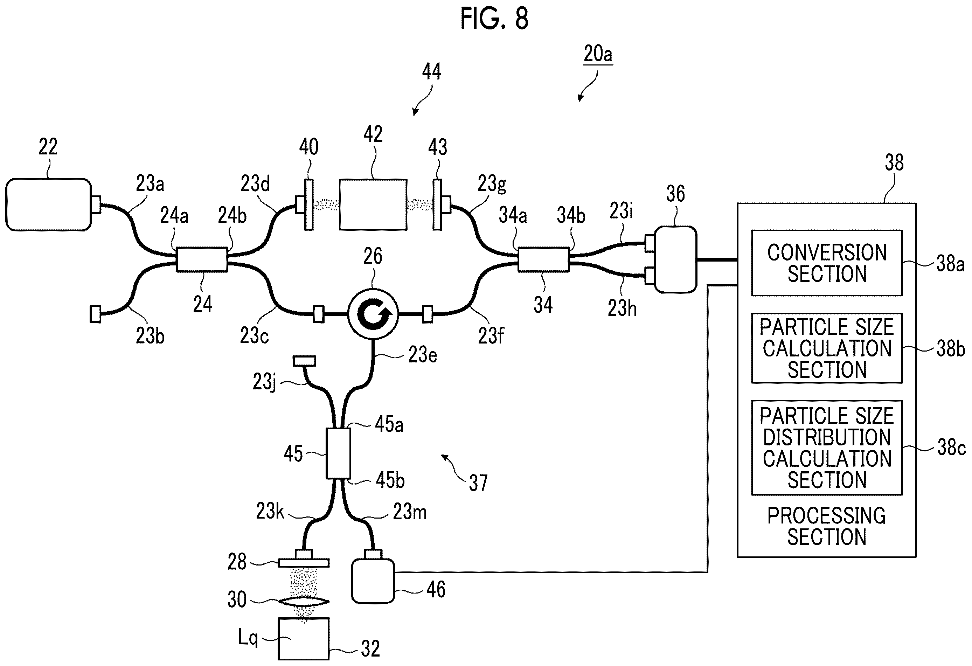

The optical measurement device 20 is not limited to the configuration illustrated in FIG. 7, and an optical measurement device 20a illustrated in FIG. 8 may be used.

FIG. 8 is a schematic diagram illustrating a second example of the optical measurement device according to the embodiment of the present invention. In FIG. 8, the same components as those of the optical measurement device 20 illustrated in FIG. 7 are designated by the same reference numerals, and detailed description thereof will be omitted.

The optical measurement device 20a illustrated in FIG. 8 is different from the optical measurement device 20 illustrated in FIG. 7 in that the optical measurement device 20a includes a measurement unit 46 that measures the intensity of the incident light. In the optical measurement device 20a, the first coupler 24, the circulator 26, the collimating lens 28, the objective lens 30, the second coupler 34, the third coupler 45, the measurement unit 46, the detector 36, and the optical fibers 23a to 23m constitute the measurement section 37.

The optical measurement device 20a can more accurately measure the intensity of the incident light incident on the sample cell 32 by providing the measurement unit 46. Therefore, in a case in which the dependence of the diffusion coefficient of the particles on the intensity of the incident light or the dependence of the reciprocal of the particle size of the particles on the intensity of the incident light illustrated in FIG. 2 is used, the particle size and the particle size distribution can be more accurately measured.

Specifically, in the optical measurement device 20a, as illustrated in FIG. 8, the third coupler 45 is provided in the optical fiber 23e connected to the circulator 26. The third coupler 45 has the same configuration as the first coupler 24, and has a two-input and two-output configuration in which light is input at an end face 45a and output from an end face 45b. The optical fiber 23e and the optical fiber 23j are connected to the end face 45a. The optical fiber 23k and the optical fiber 23m are connected to the end face 45b.

The optical fiber 23k is connected to the collimating lens 28. The optical fiber 23m is connected to the measurement unit 46.

The third coupler 45 splits the light from the optical fiber 23e to the optical fiber 23k and the optical fiber 23m. The optical fiber 23k is connected to the collimating lens 28, and the light incident on the optical fiber 23k is used for the measurement of the particles. Therefore, it is preferable that, in the third coupler 45, the splitting ratio to the optical fiber 23k is greater than the splitting ratio to the optical fiber 23m. Further, the light incident on the optical fiber 23m is used for the measurement of the intensity of the incident light. Therefore, the ratio of the light incident on the optical fiber 23 is not particularly limited as long as the intensity can be measured by the measurement unit 46. In addition, the arrangement position of the measurement unit 46 is not particularly limited as long as the intensity of the light can be measured from the light source 22.

The measurement unit 46 is connected to the processing section 38. The intensity of the incident light measured by the measurement unit 46 is output to the processing section 38.

The configuration of the measurement unit 46 is not particularly limited as long as the intensity of the incident light can be measured. The measurement unit 46 may be, for example, a photomultiplier tube, a photodiode, an avalanche photodiode, or a time correlator.

The optical fiber 23j is connected to the end face 45a of the third coupler 45, but the optical fiber 23j is not connected to the third coupler 45 or the like.

The configuration of the optical fibers 23a to 23m is not particularly limited as long as the light can be transmitted, and known optical fibers can be used as appropriate.

In addition, both the optical measurement devices 20 and 20a are optical measurement devices using the low-coherence dynamic light scattering method (LC-DLS), but the present invention is not limited to this, and an optical measurement device using the dynamic light scattering method (DLS) can be used as long as the intensity of the light source 22 can be varied.

(First Example of Optical Measurement Method)

The optical measurement is performed based on the above-described measurement principle. For the optical measurement, for example, the optical measurement device 20 illustrated in FIG. 7 and the optical measurement device 20a illustrated in FIG. 8 are used.

A first example of the optical measurement method is an optical measurement method for the dispersion liquid containing the particles.

In the first example of the optical measurement method, first, the scattering intensity of the scattered light obtained by causing the incident light to be incident on the dispersion liquid Lq while varying the intensity of the incident light is measured a plurality of times to obtain a plurality of scattering intensity data (measurement step).

In this case, for example, a supercontinuum light source is used as the light source 22 illustrated in FIG. 7 to measure the dispersion liquid Lq containing the particles.

The light emitted from the light source 22 is split by the first coupler 24, for example, with an intensity ratio of 99:1, 99% of the split light is output to the optical fiber 23c, and is focused by the objective lens 30 via the circulator 26, the optical fiber 23e, and the collimating lens 28 and then incident on the dispersion liquid Lq as the incident light.

The scattered light obtained by scattering the incident light by the particles is collected by the objective lens 30, passes through the collimating lens 28 and the optical fiber 23e, and is output to the optical fiber 23f by the circulator 26, and the scattered light is input to the second coupler 34.

Meanwhile, 1% of the light split by the first coupler 24 is used as the reference light. The split 1% of the light is output to the optical fiber 23d, passes through the first collimating lens 40, the modulator 42, and the second collimating lens 43, is phase-modulated, passes through the optical fiber 23g, and is input to the second coupler 34 as the reference light.

In the second coupler 34, the reference light and the scattered light interfere with each other to obtain the interference light. Then, the interference light is split, for example, with the intensity ratio of 1:1, and two light beams are output to the detector 36.

In the detector 36, a difference between the two light beams output from the second coupler 34 is taken. As a result, the common-mode noise is removed, the signal of the scattered light including the interference component is obtained, and the signal of the scattered light of the difference between the two light beams is converted into the electrical signal to obtain the scattering intensity data. The detector 36 outputs the scattering intensity data to the processing section 38.

The above-described step is performed a plurality of times while varying the intensity of the incident light to obtain the signal of the scattered light by the detector 36, that is, the measurement section 37 for each measurement, further obtain the scattering intensity data, and obtain the plurality of scattering intensity data.

Next, the plurality of scattering intensity data obtained from the signal of the scattered light obtained by the measurement step by the measurement section 37 is converted into the time-varying characteristic data of the plurality of scattered electric fields or scattering intensities as described above (conversion step). The time-varying characteristic data of the plurality of scattered electric fields or scattering intensities is, for example, a plurality of autocorrelation functions or a plurality of power spectra.

Specifically, in the conversion section 38a, the plurality of scattering intensity data are converted into the time-varying characteristic data of the plurality of scattered electric fields or scattering intensities, for example, the plurality of autocorrelation functions or the plurality of power spectra by a known method.

The particle size of the particles is obtained using the time-varying characteristic data of the plurality of scattered electric fields or scattering intensities obtained in the conversion step (particle size calculation step).

Specifically, in the particle size calculation section 38b, the autocorrelation function or the power spectrum obtained by the conversion section 38a of the processing section 38 is used. For example, as illustrated in FIG. 1, the autocorrelation function is used.

The above expression (2) represents a relationship between the autocorrelation function and the exponential function $\exp(-2Dq^2\tau)$. In the particle size calculation section 38b, the diffusion coefficient D is obtained by fitting the exponential function $\exp(-2Dq^2\tau)$ to the autocorrelation function. The fitting is as described above. The particle size is obtained from the diffusion coefficient D obtained as described above.

In addition, as illustrated in FIG. 2, the particle size calculation step can also obtain the particle size of the particles by analyzing the time-varying characteristic data of the plurality of scattered electric fields or scattering intensities on the assumption that the dependence of the diffusion coefficient of the particles on the intensity of the incident light is linear, and obtaining a relationship between the particle size of the particles or the diffusion coefficient of the particles and the intensity of the incident light.

Specifically, the particle size is obtained on the assumption that the relationship between the diffusion coefficient of the particles obtained by analyzing the autocorrelation function and the intensity of the incident light is linear, for example, as represented by the straight line 12 illustrated in FIG. 2.

In this case, for example, the diffusion coefficient of the particles is obtained for each intensity of the incident light by analyzing the autocorrelation as the plurality of autocorrelation functions or the plurality of power spectra. Then, the diffusion coefficient of the particles is plotted for each intensity of the incident light to obtain the relationship between the diffusion coefficient of the particles and the intensity of the incident light. Next, the diffusion coefficient in a case in which the intensity of the incident light is 0 is obtained. The particle size of the particles is obtained from this diffusion coefficient. The particle size is a particle size that does not depend on the intensity of the incident light. In this way, even for the particles having the property of absorbing light, the particle size of the particles can be obtained.

In addition, even in a case in which the particles absorb light and the temperature rises, the particle size can be obtained as follows.

In this case, the second temperature after the temperature of the particles at the first temperature rises due to the light absorption of the incident light is obtained. Next, the particle size of the particles at the second temperature is obtained by using an expression representing the diffusion coefficient in a case in which the temperature rises for the particle size of the particles obtained in the particle size calculation step.

The first temperature is as described above. The second temperature after the temperature rises due to the light absorption of the incident light is obtained by the thermometer or the like. In a case in which the temperature rise can be obtained, the particle size of the particles at the second temperature can be obtained by using the expression (3) representing the diffusion coefficient in a case in which the temperature rise occurs. Here, T' is a temperature after the light absorption as described above, which is the second temperature in this case. $\eta'$ is a viscosity of the solvent at the temperature T', which is a viscosity at the second temperature in this case.

In addition, since the temperature rise is defined by the above expressions (6) and (7), these values may be used. The particle size of the particles at the second temperature can be obtained by using the above expression (17). In this case, d' of the above expression (17) is the particle size of the particles at the second temperature. Here, $\beta$ is obtained from $\beta/d_0$ representing the slope of the straight line illustrating the dependence on the intensity of the incident light illustrated in FIG. 2 and the intercept, that is, the particle size $d_0$ as described above.

(Second Example of Optical Measurement Method)

Although the above-described monodisperse particles have been described, the particle size distribution can also be obtained for the particles having the particle size distribution.

As described above, in the particle size distribution calculation section 38c, the particle size distribution A(d) can be obtained by fitting the exponential function $\exp(-2Dq^2\tau)$ to the autocorrelation function (particle size distribution calculation step).

The particle size distribution calculation step may further include a step of obtaining an index value representing a temperature dependence of the particle size of the particles using the time-varying characteristic data of the plurality of scattering intensities, and a step of correcting the particle size distribution of the particles obtained in the particle size distribution calculation step using the index value representing the temperature dependence of the particle size of the particles.

The index value representing the temperature dependence of the particle size of the particles is $\beta$ defined by the expression (15) as described above. $\beta$ can be obtained from $\beta D_0$ representing the slope of the straight line illustrating the dependence on the intensity of the incident light illustrated in FIG. 2 and the diffusion coefficient $D_0$ as the intercept as described above.

Furthermore, by using the expression (17), the intensity of incident light in the graph used in FIG. 1 is set as I in the expression (17), the obtained particle size distribution A(d) is corrected to $A(d_0)$, and thus a particle size distribution $A(d_0)$ taking into account the dependence on the intensity of the incident light is obtained.

In addition, even in the particle size distribution, as described above, the particle size distribution can be obtained even in a case in which the particles absorb light and the temperature rises.

In this case, the optical measurement method includes a step of obtaining the second temperature after the temperature of the particles at the first temperature rises due to the light absorption of the incident light, and in the particle size distribution calculation step, the particle size distribution of the particles can be obtained by using the second temperature for the diffusion coefficient obtained from the time-varying characteristic data of the plurality of scattered electric fields or scattering intensities.

Even in the particle size distribution, in a case in which the temperature rise can be obtained, the particle size of the particles at the second temperature can be obtained by using the expression (3) representing the diffusion coefficient in a case in which the temperature rise occurs, and the particle size distribution can be obtained. Here, T is the second temperature after the light absorption as described above, and $\eta'$ is a viscosity at the second temperature after the light absorption.

In addition, since the temperature rise is defined by the above expressions (6) and (7), these values may be used. The particle size of the particles at the second temperature can be obtained by using the above expression (17). In this case, the particle size of the particles at the second temperature can be obtained, and the particle size distribution can be obtained by using the particle size of the particles at the second temperature.

(Third Example of Optical Measurement Device)

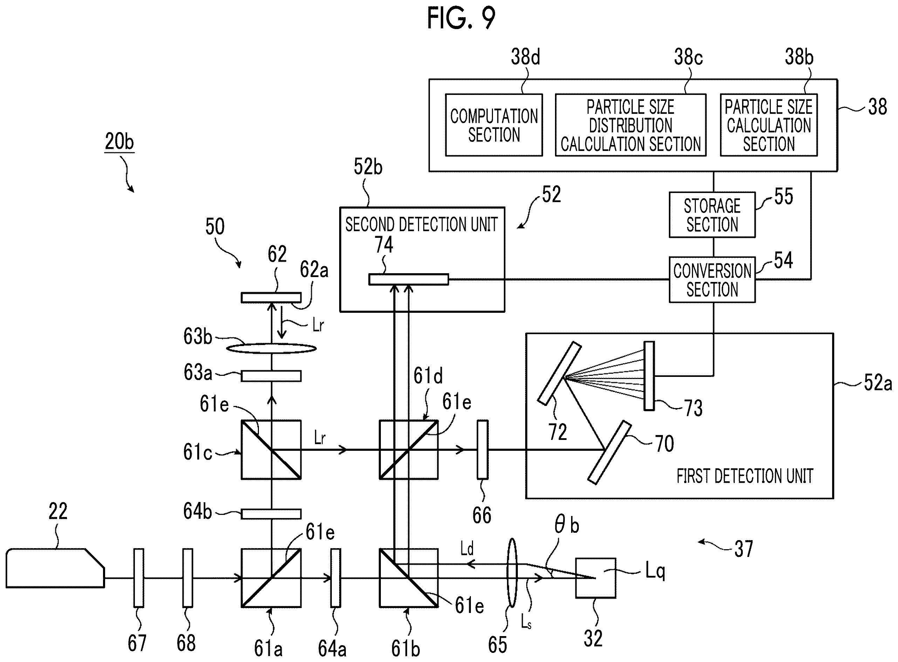

FIG. 9 is a schematic diagram illustrating a third example of the optical measurement device according to the embodiment of the present invention. In FIG. 9, the same components as those of the optical measurement device 20 illustrated in FIG. 7 are designated by the same reference numerals, and detailed description thereof will be omitted.

An optical measurement device 20b illustrated in FIG. 9 is different from the optical measurement device 20 illustrated in FIG. 7 in that the optical measurement device 20b further has a function of measuring, a plurality of times, the scattering intensity of the scattered light obtained by causing the incident light to be incident while varying a value of at least any one of a scattering angle or a measurement wavelength among the measurement parameters to obtain a plurality of scattering intensity data.

The optical measurement device 20b illustrated in FIG. 9 includes a low-coherence interferometer 50, a detection section 52 including a first detection unit 52a and a second detection unit 52b, a conversion section 54, the processing section 38, and a storage section 55. The optical measurement device 20b includes the sample cell 32.

In the optical measurement device 20b, the low-coherence interferometer 50 and the detection section 52 including the first detection unit 52a and the second detection unit 52b constitute the measurement section 37.

In the optical measurement device 20b, the conversion section 54 is not provided in the processing section 38, but the conversion section 54 has the same function as the conversion section 38a of the optical measurement device 20 illustrated in FIG. 7 and has the same configuration as the conversion section 38a.

The low-coherence interferometer 50 is an optical interferometer using a light source that emits low-coherence light to the light source.

The low-coherence interferometer 50 includes, for example, the light source 22 and four beam splitters 61a, 61b, 61c, and 61d. Each of the four beam splitters 61a, 61b, 61c, and 61d includes a transmissive/reflective surface 61e that splits the incident light into two light beams or combines two incident light beams. The transmissive/reflective surface 61e is an inclined surface inclined at an angle of 45°.

All of the four beam splitters 61a, 61b, 61c, and 61d are cube type beam splitters having a cubic shape. The form of the beam splitter is not limited to the cube type, and may be a flat plate type.

In addition, the low-coherence interferometer 50 is not limited to the configuration illustrated in FIG. 9.

Four beam splitters 61a, 61b, 61c, and 61d are arranged at positions of vertices of a quadrangle. Transmissive/reflective surfaces 61e of the beam splitters 61a and 61d arranged on the diagonal line are parallel to each other. In addition, the beam splitters 61b and 61c arranged on a diagonal have transmissive/reflective surfaces 61e parallel to each other. The transmissive/reflective surfaces 61e of the four beam splitters 61a, 61b, 61c, and 61d are not parallel to the transmissive/reflective surfaces 61e of the adjacent beam splitters 61a, 61b, 61c, and 61d, and are specifically anti-parallel.

The beam splitter 61a and the beam splitter 61c are arranged side by side, and a reflector 62 is arranged on the side of the beam splitter 61c opposite to the beam splitter 61a. A dispersion assurance adjustment section 63a and an objective lens 63b are arranged between the beam splitter 61c and the reflector 62 from the beam splitter 61c side.

The reflector 62 reflects the incident light, and a reflective surface 62a of the reflector 62 is a reference surface.

The reflector 62 is not particularly limited as long as the incident light can be reflected, and for example, a mirror or a glass plate is used.

The dispersion assurance adjustment section 63a compensates for group velocity dispersion by the sample cell 32.

In a case in which the sample cell 32 is made of optical glass as described below, the dispersion assurance adjustment section 63a compensates for group velocity dispersion due to a thickness of the optical glass constituting the sample cell 32. A glass plate having a thickness equal to that of the optical glass constituting the sample cell 32 is arranged between the beam splitter 61c and the objective lens 63b to compensate for group velocity dispersion of the transmitted light. That is, the dispersion assurance adjustment section 63a adjusts an optical path length difference due to a difference in wavelength of the reference light Lr, and matches the optical path length of the reference light Lr and the scattered light Ld for each wavelength.

The objective lens 63b focuses the light incident on the reflector 62 onto the reflective surface 62a of the reflector 62.

The beam splitter 61a and the beam splitter 61b are arranged side by side, and a neutral density (ND) filter 64a is arranged between the beam splitter 61a and the beam splitter 61b. An ND filter 64b is arranged between the beam splitter 61a and the beam splitter 61c.

The ND filters 64a and 64b adjust the amount of light in order to balance the light intensities of the reference light Lr reflected by the reflective surface 62a of the reflector 62 and the scattered light Ld from the sample cell 32. A known ND filter can be used as appropriate for the ND filters 64a and 64b.

The sample cell 32 is arranged on the side of the beam splitter 61b opposite to the beam splitter 61a. The objective lens 65 that focuses the incident light Ls onto the sample cell 32 is arranged between the beam splitter 61b and the sample cell 32.

The beam splitter 61c and the beam splitter 61d are arranged side by side, and the first detection unit 52a is arranged on the side of the beam splitter 61d opposite to the beam splitter 61c. A polarization adjustment section 66 is arranged between the beam splitter 61d and the first detection unit 52a.

The polarization adjustment section 66 controls a polarization state of the scattered light emitted from the beam splitter 61d and incident on the first detection unit 52a. The polarization adjustment section 66 is configured by, for example, a polarization element, and the polarization element is used as appropriate to adjust the polarization state of the scattered light Ld scattered from the dispersion liquid Lq of the sample cell 32, such as circularly polarized light, linearly polarized light, or elliptically polarized light. More specifically, for example, the polarization adjustment section 66 is configured by a polarizer. Measurement may be performed while varying a direction of a transmission axis of the polarizer in several ways.

The beam splitter 61b and the beam splitter 61d are arranged side by side, and the second detection unit 52b is arranged on the side of the beam splitter 61d opposite to the beam splitter 61b.

The first detection unit 52a includes a mirror 70 and a diffraction grating 72 on which reflected light reflected by the mirror 70 is incident. The diffraction grating 72 is an optical element that decomposes the incident light including the scattered light into light for each wavelength. The diffraction grating 72 can obtain the scattered light for each wavelength.

Further, the first detection unit 52a includes a photodetector 73 on which the diffracted light diffracted by the diffraction grating 72 in accordance with the wavelength of the scattered light is incident. The scattered light decomposed by the wavelength by the photodetector 73 is detected for each wavelength. For example, a line camera in which photoelectric conversion elements are arranged in a straight line is used as a photodetector 73. The photodetector 73 may be a line detector in which photomultiplier tubes are arranged in a straight line, instead of the line camera.

The photodetector 73 of the first detection unit 52a receives the diffracted light diffracted by the diffraction grating 72 and including the scattered light, but the diffraction angle is different for each wavelength, and a position at which the line camera as the photodetector 74 receives the light is determined. Therefore, in the first detection unit 52a, the wavelength is specified by the position at which the line camera as the photodetector 73 receives the light. In this manner, the first detection unit 52a decomposes the scattered light into wavelengths and detects the decomposed scattered light for each wavelength. As a result, it is possible to easily measure the scattering intensity of the scattered light at different wavelengths.

The diffraction grating 72 is used to obtain the light for each wavelength, but the present invention is not limited to the diffraction grating 72 as long as the light for each wavelength can be obtained. For example, a plurality of bandpass filters having different cutoff wavelength ranges are prepared, and the bandpass filters are replaced to obtain the scattered light for each wavelength. Further, a prism can also be used instead of the diffraction grating 72.

The second detection unit 52b includes a photodetector 74. The photodetector 74 detects the scattered light for each scattering angle. For example, a line camera in which photoelectric conversion elements are arranged in a straight line is used as a photodetector 74. In the second detection unit 52b, the scattering angle is specified by the position at which the line camera as the photodetector 74 receives the light. As a result, it is possible to easily measure the scattering intensity of the scattered light at different scattering angles. The photodetector 74 also detects the interference light intensity for each scattering angle for the interference light obtained by causing the scattered light to interfere with the reference light.

The photodetector 74 may be a high-speed camera instead of the line camera.

In addition, the photoelectric conversion elements used in the photodetectors 73 and 74 are, for example, photodiodes.

The sample cell 32 contains the dispersion liquid Lq containing the particles, which is the measurement target, as described above. The dispersion liquid Lq is irradiated with the incident light Ls. The sample cell 32 may be arranged in the immersion bath (not illustrated).

The light source 22 is arranged on the side of the beam splitter 61a opposite to the beam splitter 61b. The light source 22 irradiates the sample cell 32 with the incident light Ls, and causes the light emitted to the beam splitter 61a to be incident.

As described above, the light source 22 emits the low-coherence light while varying the intensity of the incident light Ls.

A spectral adjustment section 67 and a polarization control section 68 are provided between the light source 22 and the beam splitter 61a from the light source 22 side.

The spectral adjustment section 67 cuts an unnecessary wavelength range in accordance with the spectrum of the incident light Ls by the light source 22. For example, in a case in which a near-infrared light region in the supercontinuum light source cannot be detected by the photodetector 73 of the first detection unit 52a and the photodetector 74 of the second detection unit 52b, a filter that cuts the near-infrared light region is used in the spectral adjustment section 67.

In addition, in a case in which the scattering intensity is measured for each scattering angle in the second detection unit 52b, a bandpass filter may be used in the spectral adjustment section 67 in order to limit the wavelength range.

In a case in which the scattered light of the dispersion liquid Lq is measured using the light of a plurality of wavelengths, a plurality of light sources having different emission wavelengths are prepared as the light source 22. However, by using the bandpass filter as the spectral adjustment section 67, the wavelength range can be cut, so that the configuration of the light source 22 can be simplified and the device configuration can be simplified.

The polarization control section 68 controls the polarization state of the incident light and adjusts the polarization of the incident light. The polarization control section 68 is configured by, for example, a polarization element, and an appropriate polarization element corresponding to the polarization, such as circularly polarized light, linearly polarized light, or elliptically polarized light, emitted to the sample cell 32 is used. The incident light is polarized in a case of determining the shape of the particles. More specifically, the polarization control section 68 is configured by combining a polarizer and a $\lambda/4$ plate. As a result, it is possible to circularly polarize the unpolarized incident light Ls.

In the optical measurement device 20b, in a case in which the polarization of the light emitted from the light source 22 is used as it is, the polarization adjustment section 66 and the polarization control section 68 are not always required.

In the optical measurement device 20b including the first detection unit 52a and the second detection unit 52b, the scattering intensity can be easily measured at different scattering angles or different wavelengths.

In addition, in the optical measurement device 20b, in a case in which any one of the scattering angle or the wavelength is used, the detection section 52 may include any one of the first detection unit 52a or the second detection unit 52b.

The light emitted from the light source 22 is split by the transmissive/reflective surface 61e of the beam splitter 61a, is transmitted through the transmissive/reflective surface 61e to be incident on the beam splitter 61b, and is transmitted through the transmissive/reflective surface 61e of the beam splitter 61b to be emitted to the sample cell 32 as the incident light Ls. The scattered light Ld generated by scattering the incident light Ls in the dispersion liquid Lq of the sample cell 32 is reflected by the transmissive/reflective surface 61e of the beam splitter 61b to the beam splitter 61d.

The scattered light Ld reflected by the transmissive/reflective surface 61e of the beam splitter 61d among the light beams emitted from the light source 22 is incident on the first detection unit 52a.

The light split by the transmissive/reflective surface 61e of the beam splitter 61a and incident on the beam splitter 61c is transmitted through the transmissive/reflective surface 61e, is incident on the reflector 62, and is reflected by the reflective surface 62a of the reflector 62. This reflected light is the reference light Lr. The reference light Lr is reflected by the transmissive/reflective surface 61e of the beam splitter 61c and is incident on the beam splitter 61d. The reference light Lr transmitted through the transmissive/reflective surface 61e of the beam splitter 61d is incident on the first detection unit 52a. The scattered light Ld and the reference light Lr are incident on the first detection unit 52a and interfere with each other in this way. Here, at least a part of the scattered light Ld and the reference light Lr need only interfere with each other, and it is preferable to adjust the optical path length to cause only the scattered light Ld generated at a specific depth of the dispersion liquid Lq to interfere with the reference light Lr.

In the first detection unit 52a, the light-receiving position of the photodetector 73 is determined for each wavelength by the diffraction grating 72, the interference light can be detected for each wavelength, and the data of the interference light intensity for each wavelength is obtained. As a result, in the conversion section 54, the scattering intensity data of the dispersion liquid Lq at a specific depth and a specific wavelength can be obtained from the interference spectrum of the scattered light. It may be considered that the depth refers to the optical path length in which the scattered light passes through the dispersion liquid Lq.

The first detection unit 52a can detect the interference light for each intensity of the incident light at a specific wavelength, and obtain the data of the interference light intensity for each intensity of the incident light.

In addition, the scattered light Ld is transmitted through the transmissive/reflective surface 61e of the beam splitter 61d and is incident on the second detection unit 52b.

The reference light Lr reflected by the transmissive/reflective surface 61e of the beam splitter 61d among the reference light beams Lr is incident on the second detection unit 52b. The scattered light Ld and the reference light Lr are incident on the second detection unit 52b and interfere with each other in this way. Here, at least a part of the scattered light and the reference light Lr need only interfere with each other, and it is preferable to adjust the optical path length to cause only the scattered light Ld generated at a specific depth of the dispersion liquid Lq to interfere with the reference light Lr.

The reflection position of the scattered light Ld on the transmissive/reflective surface 61e of the beam splitter 61b varies depending on the scattering angle θb of the dispersion liquid Lq, and the light-receiving position in the photodetector 74 also varies. Therefore, in the second detection unit 52b, the light-receiving position of the photodetector 74 is determined for each scattering angle, the interference light between the reference light and the scattered light can be detected for each scattering angle, and the data of the interference light intensity for each scattering angle is obtained. As a result, in the conversion section 54, the scattering intensity data at a specific scattering angle can be obtained from the data of the interference light intensity for each scattering angle for the scattered light of the dispersion liquid Lq at a specific depth corresponding to the same optical path length as the reference light.

The scattering angle θb (°) in FIG. 9 is an angle based on the backward scattered light of the scattering angle 180°. A general scattering angle θ (°) in which the angle of the forward scattering is set to 0° has a relationship of θ (°) = 180° - θb (°).

Further, the second detection unit 52b can detect the interference light at a specific scattering angle for each intensity of the incident light, and obtain the data of the interference light intensity for each intensity of the incident light.

The processing section 38 is connected to the conversion section 54, and the storage section 55 is connected to the conversion section 54 and the processing section 38.

The conversion section 54 extracts a plurality of values proportional to the scattering intensity or the electric field of the scattered light at a specific wavelength from the data of the interference light intensity detected by the first detection unit 52a, or a plurality of values proportional to the scattering intensity or the electric field of the light at a specific scattering angle from the data of the interference light intensity detected by the second detection unit 52b.

In addition, the conversion section 54 extracts a plurality of values proportional to the scattering intensity or the electric field of the scattered light at a specific wavelength from the data of the interference light intensity obtained for each intensity of the incident light detected by the first detection unit 52a. In addition, the conversion section 54 extracts a plurality of values proportional to the scattering intensity or the electric field of the light at a specific scattering angle from the data of the interference light intensity obtained for each intensity of the incident light detected by the second detection unit 52b.

Then, the conversion section 54 converts the extracted scattering intensity data into the time-varying characteristic data of the scattering intensity of the scattered light at a specific depth of the dispersion liquid Lq.

The conversion section 54 is connected to the photodetector 73 of the first detection unit 52a and the photodetector 74 of the second detection unit 52b. The conversion section 54 acquires the data of the light intensity at a specific wavelength detected by the photodetector 73 of the first detection unit 52a, and extracts a plurality of scattering intensity data at the specific wavelength. Then, the conversion section 54 converts the extracted scattering intensity data into, for example, the power spectrum or the autocorrelation function as the time-varying characteristic data of the scattering intensity of the scattered light at a specific depth of the dispersion liquid Lq.

In addition, the conversion section 54 causes only the scattered light generated at a specific depth of the dispersion liquid Lq by the position control of the reflector 62, which is detected by the photodetector 74 of the second detection unit 52b, to interfere with each other, acquires the data of the intensity of the interference light at a specific scattering angle, and extracts a plurality of scattering intensities at the specific scattering angle. The conversion section 54 converts the extracted scattering intensity data into, for example, the power spectrum or the autocorrelation function as the time-varying characteristic data of the scattering intensity of the scattered light at a specific depth of the dispersion liquid Lq.

In addition, the conversion section 54 acquires the data of the interference light intensity for each intensity of the incident light obtained by the first detection unit 52a or the data of the interference light intensity for each intensity of the incident light obtained by the second detection unit 52b, and extracts a plurality of scattering intensities for each intensity of the incident light. The conversion section 54 converts the extracted scattering intensity data into, for example, the power spectrum or the autocorrelation function as the time-varying characteristic data of the scattering intensity of the scattered light at a specific depth of the dispersion liquid Lq.

The scattered light of the dispersion liquid Lq includes the components of the light scattered at various depths of the dispersion liquid Lq, and the number of times of scattering and the intensity are different. In order to accurately measure the particle size or the like of the particles, it is necessary to analyze the scattered light at a specific depth of the dispersion liquid Lq. By setting the specific depth of the dispersion liquid Lq, for example, single scattered light obtained by scattering the light only once can be obtained from the scattered light.

The analysis of converting the extracted scattering intensity data into the time-varying characteristic data of the scattering intensity of the scattered light at a specific depth of the dispersion liquid Lq in the conversion section 54 will be described later.

In addition, the conversion section 54 converts the signals of the plurality of scattered light beams into a plurality of time-averaged scattered electric field data or time-averaged scattering intensity data. The time-averaged scattered electric field data or the time-averaged scattering intensity data is output to the particle size distribution calculation section 38c of the processing section 38. The time-averaged scattered electric field data or the time-averaged scattering intensity data is a time average of the signals of the scattered light.

As described above, the conversion section 54 obtains the time average of the signals of the plurality of scattered light beams and converts the time average into a plurality of time-averaged scattered electric field data or time-averaged scattering intensity data, whereby, for example, the time average value of the scattering intensity can be obtained at different scattering angles or different wavelengths.

For example, data indicating a relationship between the scattering angle and the time average value of the scattering intensity can be obtained, which corresponds to the scattering angle-dependent data. Data indicating a relationship between the wavelength and the time average value of the scattering intensity can also be obtained, which corresponds to the wavelength-dependent data.

In addition, the plurality of time-averaged scattered electric field data or time-averaged scattering intensity data may be a value calculated by simulation. In this case, the conversion section 54 performs the simulation. For example, at least one of a Mie scattering theoretical expression, a discrete dipole approximation method (DDA method), or a finite-difference time-domain method (FDTD method) is used for the simulation. The discrete dipole approximation method (DDA method) and the finite-difference time-domain method (FDTD method) correspond to the simulation based on the theory of electromagnetic-wave behavior. A method corresponding to the simulation based on the theory of electromagnetic-wave behavior can be suitably used, and is not particularly limited to the discrete dipole approximation method (DDA method) and the finite-difference time-domain method (FDTD method) described above.

Furthermore, the theoretical expression is not particularly limited to the above-described formula, and various theoretical expressions, such as a scattering theory, can be suitably used.

The conversion section 54 executes a program (computer software) stored in a read only memory (ROM) or the like to extract a plurality of scattering intensities as described above, and converts the extracted scattering intensity data into the time-varying characteristic data of the scattering intensity of the scattered light at a specific depth of the dispersion liquid Lq. The conversion section 54 may be configured by a computer in which each section functions by executing the program as described above, may be a dedicated device in which each section is configured by a dedicated circuit, or may be configured by a server to be executed on the cloud.

The processing section 38 has the same configuration as the optical measurement device 20 described above, and includes the particle size calculation section 38b, the particle size distribution calculation section 38c, and a computation section 38d.

The particle size calculation section 38b of the processing section 38 obtains the particle size of the particles by the same method as the optical measurement device 20 illustrated in FIG. 7 by using the time-varying characteristic data of the scattering intensity acquired by the conversion section 54.

In addition, the processing section 38 obtains the particle size distribution for each of the plurality of particle types contained in the dispersion liquid by fitting the time-varying characteristic data of the scattering intensity acquired by the conversion section 54 and the time-averaged scattered electric field data or the time-averaged scattering intensity data acquired by the conversion section 54 to a theoretical expression defining the relationship between the particle size and the scattering intensity. Various calculation methods used in the dynamic light scattering method can be used as appropriate for the calculation of the particle size of the particles in the processing section 38. In addition, the particle size distribution for each of the plurality of particle types contained in the dispersion liquid will be described later.

The storage section 55 stores at least one of the scattering angle-dependent data of the scattered light intensity of the known particles or the wavelength-dependent data of the scattered light intensity of the known particles, which are obtained from the complex refractive index, the particle size, and the shape of the known particles.

By storing at least one of the scattering angle-dependent data of the scattered light intensity of the known particles or the wavelength-dependent data of the scattered light intensity of the known particles in the storage section 55, the data can be referred to in a case of obtaining the particle size distribution of the particles or in a case of fitting. Therefore, it is preferable to store at least one of the scattering angle-dependent data of the scattered light intensity of the known particles or the wavelength-dependent data of the scattered light intensity of the known particles for various particles, and to construct a model library.

In addition, the storage section 55 also stores various types of data obtained by the conversion section 54.

The storage section 55 is not particularly limited as long as the storage section 55 can store the scattering angle-dependent data of the scattered light intensity of the known particles, the wavelength-dependent data of the scattered light intensity of the known particles, and various types of data obtained by the conversion section 54 described above, and for example, various storage media such as a hard disk or a solid state drive (SSD) can be used.

The optical measurement device 20b is the same as the optical measurement device 20 described above, and the scattering intensity of the scattered light obtained by causing the incident light from the light source 22 to be incident on the dispersion liquid Lq while varying the intensity of the incident light is measured a plurality of times to obtain a plurality of scattering intensity data in the conversion section 54, and the conversion section 54 converts the plurality of scattering intensity data into the time-varying characteristic data of the plurality of scattered electric fields or scattering intensities. Then, the particle size calculation section 38b obtains the particle size $d_0$ that does not depend on the intensity of the incident light by using the time-varying characteristic data of the plurality of scattered electric fields or scattering intensities. The particle size $d_0$ that does not depend on the intensity of the incident light is the measured particle size of the particles.

The optical measurement device 20b includes the particle size distribution calculation section 38c as in the optical measurement device 20 described above.

In addition, the processing section 38 includes a computation section 38d that performs fitting for obtaining the particle size distribution for each of the plurality of particle types by using at least one of the scattering angle-dependent data of the scattered light intensity of the known particles or the wavelength-dependent data of the scattered light intensity of the known particles stored in the storage section 55.

The computation section 38d obtains the particle size distribution of the particles by fitting the time-varying characteristic data of the plurality of scattered electric fields or scattering intensities and the plurality of time-averaged scattered electric field data or time-averaged scattering intensity data obtained by the conversion section 38a to a theoretical expression defining the relationship between the particle size and the scattering intensity. The fitting by the computation section 38d will be described later.

The computation section 38d of the processing section 38 can also read out the various types of data obtained by the conversion section 54 stored in the storage section 55 and perform the fitting. In addition, the processing section 38 can also determine the aggregation state of the particles or the type of the particles by comparing the particle size distribution value obtained from the measured fluctuation data and the scattering characteristics of the particles stored in the model library with respect to the measured wavelength dependence or intensity dependence of the scattered light.

The scattering characteristics of the particles are, for example, the scattering angle-dependent data of the scattered light intensity of the known particles and the wavelength-dependent data of the scattered light intensity of the known particles. The scattering characteristics of these particles may be a measured value obtained by using known particles such as standard particles, or may be a calculated value obtained by a theoretical expression defining the relationship between the particle size and the scattering intensity, such as a Mie scattering theoretical expression. The scattering characteristics of the particles may be values calculated by simulation. The values calculated by the simulation are obtained using, for example, a finite-difference time-domain method (FDTD method) or a discrete dipole approximation (DDA) method. The scattering characteristics of the particles are stored in the storage section 55 as the model library, for example.

In the optical measurement device 20b, the reference light Lr may be cut off to prevent the scattered light from interfering with the reference light. In this case, normal dynamic light scattering measurement can be performed by cutting off the reference light Lr. As a method of cutting off the reference light Lr, for example, a method of providing a movable light shielding plate between the beam splitter 61a and the beam splitter 61c to prevent the light split from the beam splitter 61a from reaching the reflector 62 may be used.

In addition, a movable light shielding plate may be provided between the beam splitter 61c and the beam splitter 61d to shield the reference light Lr that reaches the beam splitter 61d to cut off the reference light Lr.

The light shielding is not limited to the movable light shielding plate as long as the light can be shielded, and for example, a light shutter using a liquid crystal shutter can be used.

With the above-described configuration, the optical measurement device 20b can also be used as a dynamic light scattering device for normal homodyne detection.

In the optical measurement device 20b, the measurement section 37 detects the interference light intensity for each intensity of the incident light. As a result, the scattering intensity of the scattered light obtained by being incident on the dispersion liquid Lq is measured a plurality of times, the plurality of scattering intensity data for each intensity of the incident light are obtained in the conversion section 54, and the plurality of scattering intensity data are converted into the time-varying characteristic data of the plurality of scattered electric fields or scattering intensities.

The particle size calculation section 38b obtains the measured particle size of the particles by using the time-varying characteristic data of the plurality of scattered electric fields or scattering intensities. That is, the particle size $d_0$ that does not depend on the intensity of the incident light is obtained. In the optical measurement device 20b, the measured particle size of the particles is obtained first, and the measured particle size is used in the computation section 38d to obtain the particle size distribution.

In addition, in the optical measurement device 20b, for example, the interference light intensity for each wavelength is detected.

For example, three interference intensity spectra at wavelengths of center wavelengths of 620 nm, 640 nm, and 660 nm are extracted as a representative of the spectra of the interference light obtained by the first detection unit 52a. The width of the wavelength is ±9 nm for each of the center wavelengths of 620 nm, 640 nm, and 660 nm.

Next, in the conversion section 54, data of a signal component proportional to the electric field of the scattered light at each wavelength at a specific depth is acquired from the interference light intensity detected by the first detection unit 52a. The scattering intensity data of each wavelength is converted into a power spectrum as the time-varying characteristic data of the scattering intensity of the scattered light at a specific depth of the dispersion liquid Lq. As a result, the power spectrum is obtained. Further, in the conversion section 54, the power spectrum is subjected to an inverse Fourier transform to obtain the autocorrelation function for each wavelength.

Next, in the processing section 38, for example, the slope Γg is obtained for each of the common logarithms ($\log_{10}$) of the autocorrelation functions at each wavelength. The diffusion coefficient D at each wavelength is obtained using the slope Γg. The diffusion coefficient D is represented by $D = Γg/q^2$. Here, q is a scattering vector.

Here, the diffusion coefficient D and the particle size d are expressed by the Stokes-Einstein expression (see the expression (1)) as described above. The method of calculating the particle size distribution from the slope of the autocorrelation function is not limited to the present method, and a CONTIN method, a histogram method, a cumulant expansion, and the like are known, and these methods can be used.

Next, in the processing section 38, the hydrodynamic particle size of the particles at each wavelength is obtained using the diffusion coefficient D at each wavelength. The hydrodynamic particle size is the above-described particle size d.

All of the optical measurement devices 20, 20a, and 20b are optical measurement devices using the low-coherence dynamic light scattering method (LC-DLS), and acquire the time-varying characteristic data of the scattered electric field instead of the time-varying characteristic data of the scattering intensity. The scattering intensity and the scattered electric field have a relationship of scattering intensity = |scattered electric field|$^2$.

(Third Example of Optical Measurement Method)

In the third example of the optical measurement method, in the optical measurement device 20b, a plurality of intensities of the incident light are used. The scattering intensity of the scattered light obtained by being incident on the dispersion liquid Lq is measured a plurality of times, the plurality of scattering intensity data are obtained in the conversion section 54, and the plurality of scattering intensity data are converted into the time-varying characteristic data of the plurality of scattered electric fields or scattering intensities. The particle size calculation section 38b obtains the measured particle size of the particles by using the time-varying characteristic data of the plurality of scattered electric fields or scattering intensities.

In addition, in the third example of the optical measurement method, in the optical measurement device 20b, a plurality of wavelengths are used.

For example, the dispersion liquid containing the particles is measured using a supercontinuum light source. The light of each wavelength is detected by the photodetector 73 of the first detection unit 52a by the measurement. The light of each wavelength incident on the photodetector 73 includes the interference light between the scattered light and the reference light, and is represented by, for example, the interference spectrum. The intensity $I_k$ of the interference spectrum is expressed by the following expression. In the following expression, $E_S$ is the electric field of the scattered light, $E_S^*$ is the complex conjugate of $E_S$, $E_R$ is the electric field of the reference light, and $E_R^*$ is the complex conjugate of $E_R$.

$$I_k = |E_R + E_S|^2 = |E_R|^2 + |E_S|^2 + E_R E_S^* + E_S E_R^*$$

Then, for the interference spectrum, for example, a wavelength region (not illustrated) having a center wavelength of 620 nm is extracted. The width of the wavelength range is ±9 nm with respect to a center wavelength 620 nm. As a result, the scattering intensity of the specific wavelength region is extracted from the scattering intensity data for each wavelength. After extracting the scattering intensity of the specific wavelength region, an inverse Fourier transform $F^{-1}$ is performed on the wavelength region with respect to the intensity $I_k$ of the interference spectrum. As a result, for example, a scattering profile $F^{-1}(I_k)$ of the dispersion liquid Lq in a depth direction at a center wavelength of 620 nm is obtained.

The depth direction of the dispersion liquid Lq is an optical axis direction of the objective lens 65.

The above-described inverse Fourier transform is expressed by the following expression.

$$F^{-1}(I_K) = |r_r|^2 E_0{}^2\delta(z) + r_r E_0{}^2\rho(s/2) + E_0{}^2\Gamma_\rho(s/2)$$

Here, $r_r$ is a reflectivity of the reflector 62 with respect to the electric field, $E_0$ is an electric field of the light emitted to the sample, $\delta(z)$ is a delta function, $\rho$ is a diffuse reflectivity of the scattered electric field from a position at a depth of s/2 from the interface of the dispersion liquid, and $T_\rho$ is an autocorrelation function of the diffuse reflectivity of the scattered electric field with respect to the depth dependence.

In the profile of the dispersion liquid in the depth direction, for example, a single scattering region is extracted as a region of interest in the depth. The single scattering region, that is, the region in which the light is scattered only once is determined by the optical path length in the optical measurement device 20b, and it is preferable to specify the optical path length of the single scattering region in advance in the optical measurement device 20b. The region of interest in the depth described above corresponds to a specific depth of the dispersion liquid Lq.

A time response of the electric field of the region of interest in the depth is obtained by the first detection unit 52a. All of the time-series data of the signal obtained by the photodetector 73 are processed in the same manner, and the time dependence of the signal amount proportional to the scattered electric field $E_0\rho(s/2)$ in the region of interest in the depth is obtained. A Fourier transform is performed on the time dependence of the scattered electric field, and the result is squared. As a result, a frequency response of the intensity of the scattered light, that is, the power spectrum is obtained. The power spectrum $I_{ES}$ is expressed by the following expression. Here, $\Gamma_{ES}$ in the following expression is an autocorrelation function of the electric field.

$$I_{ES} = E_S\left(\frac{s}{2}, \omega\right) E_S\left(\frac{s}{2}, \omega\right) = \iint E_S(t) E_S^*(t') e^{-i\omega(t-t')}\, dt\, dt'$$

$$= \int \Gamma_{ES}(\tau) e^{-i\omega\tau}\, d\tau$$

Then, an inverse Fourier transform is performed on the power spectrum $I_{ES}$. As a result, the autocorrelation function of the scattered electric field is obtained. The above-described inverse Fourier transform is expressed by the following expression.

$$F^{-1}(I_{ES}) = \Gamma_{ES}(\tau) = G_{ES}{}^{(1)}(\tau)$$

As described above, the power spectrum or the autocorrelation function is obtained as the time-varying characteristic data of the scattering intensity of the scattered light at a specific depth of the dispersion liquid Lq from the extracted data of the interference light intensity. The conversion of the scattering intensity data for each wavelength detected by the first detection unit 52a into the power spectrum or the autocorrelation function at a specific depth of the dispersion liquid Lq is performed by the conversion section 54.

Next, in the particle size calculation section 38b of the processing section 38, the particle size is calculated by using the power spectrum or the autocorrelation function, which is the time-varying characteristic data of the scattering intensity acquired by the conversion section 54. The method of calculating the particle size using the autocorrelation function is as described above. This particle size of the particle is different from the above-described measured particle size.

The wavelength dependence of the time average of the scattered electric field can be obtained by calculating the time average of the signal in the region of interest in the depth after extracting the wavelength region, and dividing the time average by the intensity signal in the same wavelength region as the above-described wavelength region in the spectrum of the reference light. By further squaring this result, the scattered light intensity normalized by the light source spectrum is obtained. As described above, for example, information on the single scattered static light scattering in the wavelength region having a center wavelength of 620 nm can be obtained.

For example, for a wavelength region having a center wavelength of 640 nm, for example, for a wavelength region having a center wavelength of 660 nm, information on the single scattered static light scattering at each wavelength can be obtained by extracting a wavelength region having a center wavelength of 640 nm and a wavelength region having a center wavelength of 660 nm from the interference spectrum. The width of the wavelength range is, for example, ±9 nm with respect to the center wavelengths of 640 and 660 nm.

In the bridging aggregate, the average interparticle distance is equal to or greater than the particle size of the single particle. The data of the single particle and the bridging aggregate is stored in the storage section 55 (see FIG. 9) as the model library. The bridging aggregate is formed of, for example, particles having a predetermined size and a polymer between the particles. As the polymer, a polymer having a functional group (for example, a polar group) that aggregates the particles with each other is usually used.

In the bridging aggregate, the scattering intensity decreases with the increase in the wavelength. On the other hand, in the single particle, the scattering intensity increases with the increase in the wavelength.

In the dynamic light scattering method (DLS), only the hydrodynamic size of the particles is known. Therefore, even in a case in which the particle size of the particles is known, it is not possible to determine whether the particle is any one of the above-described bridging aggregate or the single particle. Since the scattering intensity of the single particle increases with the increase in the wavelength, it can be determined that the particle is the single particle. The determination of the single particle is performed by the processing section 38.

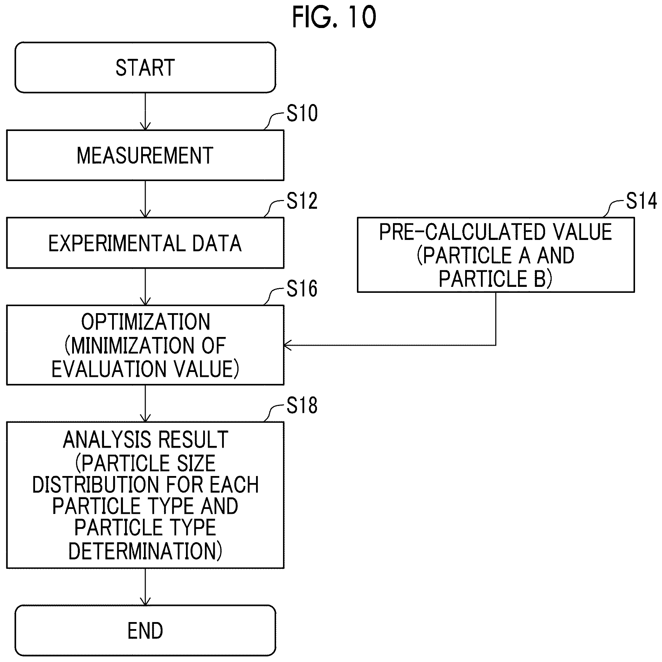

In a procedure (see FIG. 10) described later, not only the hydrodynamic particle size but also the state of the particles in the dispersion liquid and the type of particle in the dispersion liquid can be determined by comparing a combination of wavelength dependence of dynamic light scattering and static light scattering with data of the model library. The state of the particles in the dispersion liquid is, for example, the aggregation state. The type of the particles in the dispersion liquid and the state of the particles in the dispersion liquid are determined by the processing section 38. The processing section 38 need only be able to determine at least one of the type of the particles in the dispersion liquid or the state of the particles in the dispersion liquid.

(Fourth Example of Optical Measurement Method)

In the fourth example of the optical measurement method, the scattered light is scattered light obtained by causing the incident light to be incident while varying a value of at least any one of a scattering angle or a measurement wavelength among the measurement parameters.

The optical measurement method includes a conversion step of converting signals of a plurality of scattered light beams obtained in the measurement step into a plurality of time-averaged scattered electric field data or time-averaged scattering intensity data; and a calculation step of calculating a particle size or a particle size distribution for each of the plurality of particle types from the time-averaged scattered electric field data or the time-averaged scattering intensity data and the time-varying characteristic data.

In addition, the measurement step is a step of measuring, a plurality of times, a scattering intensity of the scattered light obtained by causing the incident light to be incident on the dispersion liquid while varying the intensity of the incident light to obtain a plurality of scattering intensity data and a step of measuring, a plurality of times, a scattering intensity of the scattered light obtained by causing the incident light to be incident while varying the value of at least any one of the scattering angle or the measurement wavelength among the measurement parameters to obtain a plurality of scattering intensity data.

The conversion step is a step of calculating the time-varying characteristic data of the plurality of scattered electric fields or scattering intensities from the plurality of scattering intensity data obtained in the measurement step.

The fourth example of the optical measurement method will be specifically described below, but the following description is merely an example, and is not limited to the following description.

In the fourth example of the optical measurement method, the scattering angle among the measurement parameters of the scattering angle and the measurement wavelength is used to measure the dispersion liquid containing the plurality of particle types, and the particle size or the particle size distribution for each of the plurality of particle types is calculated. Furthermore, for example, a supercontinuum light source is used as the light source.

In the optical measurement device 20b, the scattered light generated by irradiating the dispersion liquid Lq containing particles (not illustrated) with the incident light of different plurality of wavelengths is detected by the photodetector 74 for each wavelength by the first detection unit 52a to obtain data of the interference light intensity for each wavelength.

In the conversion section 54, the scattering intensity data at a specific scattering angle is obtained from the data of the interference light intensity. Next, the extracted scattering intensity data is converted into the autocorrelation function as the time-varying characteristic data of the scattering intensity of the scattered light at a specific depth of the dispersion liquid.

This is repeated a plurality of times while varying the intensity of the incident light to obtain the plurality of scattering intensity data for each intensity of the incident light (first measurement step). The plurality of scattering intensity data obtained in the first measurement step are converted into the time-varying characteristic data of the plurality of scattered electric fields or scattering intensities (first conversion step).

In the first conversion step, for example, the plurality of autocorrelation functions for each intensity of the incident light are acquired.

Next, as described above, the measured particle size of the particles is obtained by using the plurality of autocorrelation functions for each intensity of the incident light (particle size calculation step). The measured particle size of the particles obtained in the particle size calculation step is the particle size that does not depend on the intensity of the incident light. The particle size distribution is obtained by using the measured particle size of the particles as described later (particle size distribution measurement step).

Then, the scattered light obtained by causing the incident light to be incident with a changed value of at least any one of a scattering angle or a measurement wavelength among the measurement parameters is measured a plurality of times to obtain a plurality of scattering intensity data (second measurement step).

Next, the plurality of scattering intensity data obtained in the second measurement step are converted into the time-varying characteristic data of the plurality of scattered electric fields or scattering intensities and the plurality of time-averaged scattered electric field data or time-averaged scattering intensity data (second conversion step).

Then, the particle size distribution of the particles is obtained by fitting the time-varying characteristic data of the plurality of scattered electric fields or scattering intensities and the plurality of time-averaged scattered electric field data or time-averaged scattering intensity data obtained in the second conversion step to a theoretical expression defining the relationship between the particle size and the scattering intensity (particle size distribution measurement step). In a case of obtaining the particle size distribution, in the theoretical expression defining the relationship between the particle size and the scattering intensity, the measured particle size obtained in the particle size calculation step is used as the particle size. As a result, even for the particles having the property of absorbing light, the particle size distribution can be obtained with high accuracy.

More specifically, in the optical measurement device 20b, the scattered light generated by irradiating the dispersion liquid Lq with a plurality of different incident light beams is detected by the photodetector 74 for each wavelength by the first detection unit 52a to obtain data of the interference light intensity.

In the conversion section 54, the scattering intensity data for each wavelength is obtained from the scattering intensity data. Next, the extracted scattering intensity data is converted into the autocorrelation function as the time-varying characteristic data of the scattering intensity of the scattered light at a specific depth of the dispersion liquid as described above.

Next, in the processing section 38, fitting of the time-varying characteristic data of the scattering intensity acquired by the conversion section 54 and the time-averaged scattered electric field data or the time-averaged scattering intensity data acquired by the conversion section 54 to the theoretical expression defining the relationship between the particle size and the scattering intensity will be described. By the above-described fitting, the particle size distribution for each of the plurality of particle types contained in the dispersion liquid is obtained. The following calculation expression can likewise be applied to quantification or determination of particle types in cases in which the dispersion liquid contains two or more types of particles as the plurality of particle types. The method thereof will be described below. For the fitting, the scattering characteristics of the known particles may be used in addition to the theoretical expression defining the relationship between the particle size and the scattering intensity.

Here, FIG. 10 is a flowchart illustrating the fourth example of the optical measurement method according to the embodiment of the present invention. In the fourth example of the optical measurement method, the measured particle size that does not depend on the intensity of the incident light is obtained before the measurement step (step S10) of FIG. 10.

As illustrated in FIG. 10, the optical measurement method includes, for example, a measurement step (step S10), a step (step S12) of obtaining experimental data, a step (step S14) of obtaining a pre-calculated value, and a step (step S16) of optimization. In the step (step S16) of optimization, an analysis result, that is, the particle size distribution for each of the plurality of particle types is obtained (step S18).

In the measurement step (step S10), for example, the time fluctuation of the interference light intensity and the scattering angle dependence or the wavelength dependence of the time average value of the interference light intensity are measured. Step S10 corresponds to a second measurement step.

In the step of obtaining the experimental data (step S12), for example, a time correlation with respect to the time fluctuation of the interference light intensity is obtained based on measured values of the measurement step (step S10). Further, the scattering angle dependence of the time average value of the interference light intensity or the wavelength dependence of the time average value of the interference light intensity is obtained. Step S12 corresponds to a second conversion step.

In the step (step S14) of obtaining the pre-calculated value, the scattering characteristics of the particles are obtained by using, for example, the data of the single particle and the bridging aggregate stored in the storage section 55 as the model library.

In addition, the scattering characteristics of the known particles may be a measured value using standard particles as described above. The calculated value obtained by the theoretical expression or the simulation may be used as the scattering characteristics of the particles. As described above, the scattering characteristics of the particles are, for example, the scattering angle-dependent data of the scattered light intensity of the known particles and the wavelength-dependent data of the scattered light intensity of the known particles.

The scattering characteristics of the particles obtained in step S14 are used, for example, for specifying the particles in the dispersion liquid or the plurality of particle types in the dispersion liquid. For example, the particle type of the particles in the dispersion liquid and the state of the particles in the dispersion liquid are determined by comparing the measured value obtained in step S10, for example, the particle size distribution value obtained from the measured fluctuation data and the measured wavelength-dependent data of the scattered light or the measured intensity-dependent data of the scattered light, with the scattering characteristics of the particles in step S14. The measured wavelength-dependent data of the scattered light and the measured intensity-dependent data of the scattered light are obtained from the time-varying characteristic data of the scattering intensity of the scattered light acquired by the conversion section 54.

In the step (step S16) of optimization, for example, a first-order autocorrelation function and a theoretical expression of the scattering intensity are fitted to the time correlation of the time fluctuation of the interference light intensity and the time average value of the interference light intensity obtained in step S12. In step S16, the initial value is set for the number of particles for all the particle sizes, and the number of particles is updated to minimize the evaluation value to obtain the final number of particles. Hereinafter, the fitting will be described in more detail.

(First Example of Fitting)

As an example, a case will be described in which two types of particles, a particle A and a particle B, are contained in the dispersion liquid.

It is assumed that the types of the particle A and the particle B and the wavelength dependence of the complex refractive index of the particles at each particle size are known. In this case, there is wavelength-dependent data of the scattered light intensity obtained from the complex refractive index, the particle size, and the shape of the known particles, which is stored in the storage section 55 (see FIG. 9) as the model library.

The first-order autocorrelation function $g^{(1)}(\tau)$ is represented by $g^{(1)}(\tau) = \exp(-Dq^2\tau)$.

In a case in which the two types of particles, the particle A and the particle B, are contained in the dispersion liquid, the first-order autocorrelation function is expressed by the following expression (19).

In addition, the scattering intensity is expressed by the following expression (20). The following expressions (19) and (20) are theoretical expressions, and both $Is_{total}$ of the expressions (19) and (20) are calculated values. In addition, $I_{d'}{}^{A}$ and $I_{d'}{}^{B}$ are theoretical values, and the pre-calculated value obtained in step S14 can be used.

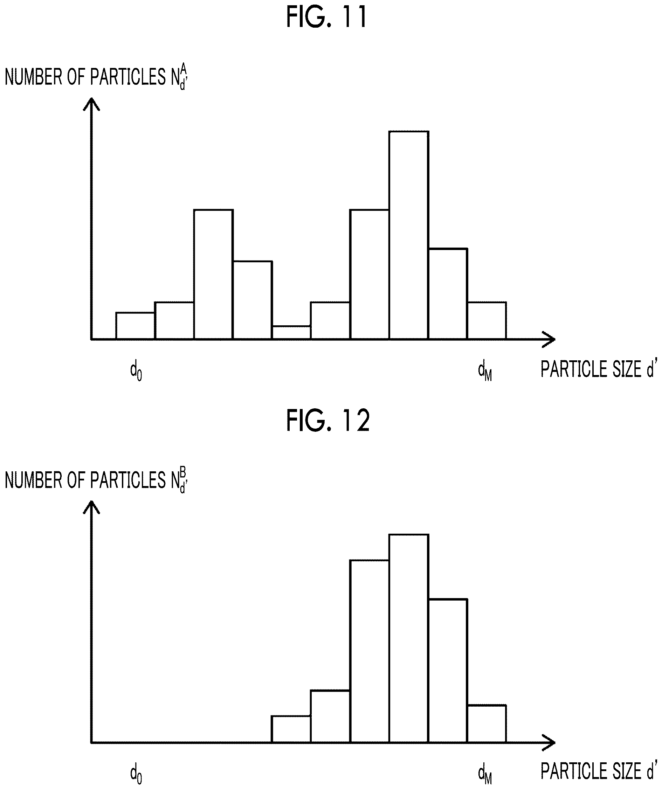

In the following expressions (19) and (20), $g^{(1)}$ indicates a first-order autocorrelation function. $Is_{total}$ indicates a total scattering intensity. In addition, d' and $d_0$ indicate the particle size. The subscripts 0 to M of d' and $d_0$ indicate the ordinal numbers of the bins of the histograms illustrated in FIGS. 11 and 12. N indicates the number of particles. The subscripts 0 to M of N indicate the ordinal numbers of the bins of the histograms illustrated in FIGS. 11 and 12. The bin of the histogram is a data interval of the histogram, and is indicated by a bar in the histogram.

D indicates a diffusion coefficient. The subscript d' of the diffusion coefficient D indicates the dependence on the particle size d'. In addition, q indicates a scattering vector. $\tau$ indicates a time lag of the first-order autocorrelation function. $\theta$ indicates a scattering angle. Is indicates the scattering intensity. The subscript d of the scattering intensity I indicates the dependence on the particle size d.

In the following expressions (19) and (20), the superscripts A and B indicate that the scattering intensity wavelength dependence corresponds to the particle A and the particle B.

$$g^{(1)}(\tau) = \sum_{d'=d_0}^{d_M} \frac{N_{d'}^{A} Is_{d'}^{A}}{Is_{total}} exp(-D_{d'}q\tau) + \sum_{d'=d_0}^{d_M} \frac{N_{d'}^{B} Is_{d'}^{B}}{Is_{total}} exp(-D_{d'}q\tau) \qquad (19)$$

In the above expression (19), the following term corresponds to the particle A and corresponds to the histogram of the particle A illustrated in FIG. 11. In the following term, $\exp(-Dq\tau)$ is a first-order autocorrelation function, and the other part of $N_{d'}{}^{A}Is_{d'}{}^{A}/Is_{total}$, indicates a proportion of the scattering intensity of all the particles A belonging to the bin of the particle size d' to the total reflection intensity. That is, the following term indicates the weighting of the particle A. $Is_{total}$ of the expression (19) is a theoretical value determined by the particle size. A Mie scattering theoretical expression can be used for the theoretical value. $Is_{total}$ of the expression (19) corresponds to the parameter-dependent data of the scattering intensity and corresponds to the time-averaged scattered electric field data or the time-averaged scattering intensity data.

$$\frac{N_{d'}^{A} Is_{d'}^{A}}{Is_{total}} exp(-D_{d'}q\tau)$$

In the above expression (19) described above, the following term corresponds to the particle B, and corresponds to the histogram of the particle B illustrated in FIG. 12. In the following term, $\exp(-Dq\tau)$ is a first-order autocorrelation function, and the other part of $N_{d'}{}^{B}Is_{d'}{}^{B}/Is_{total}$ indicates a proportion of the scattering intensity of all the particles B belonging to the bin of the particle size d' to the total reflection intensity. That is, the following term indicates weighting of the particle B.

$$\frac{N_{d'}^{B}Is_{d'}^{B}}{Is_{total}} exp(-D_{d'} \cdot q\tau)$$

$$Is_{total} = \sum_{d_0=d}^{d_M} N_{d_0}^{A}Is_{d_0}^{A} + \sum_{d_0=d}^{d_M} N_{d_0}^{B}Is_{d_0}^{B} \qquad (20)$$

In the above expression (20), $N_{d_0}{}^{A}Is_{d_0}{}^{A}$ corresponds to the scattering intensity of the particle A, and $N_{d_0}{}^{B}Is_{d_0}{}^{B}$ corresponds to the scattering intensity of the particle B.

Hereinafter, the fitting for obtaining the particle size distribution for each of the plurality of particle types will be described. In the fitting, the number of particles for each particle size is finally obtained using the particle size as a fitting parameter, and using the number of particles as a variable.

The first-order autocorrelation function $g^{(1)}(\tau)$ is measured for each wavelength, and there are a plurality of first-order autocorrelation functions. As the measured value, for example, the autocorrelation functions of the plurality of wavelength is used.

In the fitting, for each wavelength, the number of particles is used as a variable to set an initial number of particles in the expression (19) for the first-order autocorrelation function. The calculated value of the first-order autocorrelation function of the expression (19) based on the set initial number of particles is obtained. The first-order autocorrelation function for each wavelength corresponds to the time-varying characteristic data of the scattering intensity derived from the scattering characteristics using the theoretical expression.

For each wavelength, a difference between the measured value of the first-order autocorrelation function and the calculated value of the first-order autocorrelation function of the expression (19) is obtained. The difference between the measured value of the first-order autocorrelation function and the calculated value of the first-order autocorrelation function of the expression (19) is referred to as a difference of the first-order autocorrelation function. This difference of the first-order autocorrelation function is obtained for each wavelength.

For example, the total scattering intensity $Is_{total}$ is measured for each wavelength. It can also be determined that the particles are not aggregates but single particles from the total scattering intensity $Is_{total}$.

In the expression (20), the number of particles is set by using the number of particles as a variable. The value of the total scattering intensity $Is_{total}$ of the expression (20) is obtained based on the set initial number of particles.

For each wavelength, a difference between the measured value of the total scattering intensity $Is_{total}$ and the calculated value of the total scattering intensity $Is_{total}$ of the expression (20) is obtained. The difference between the measured value of the total scattering intensity $Is_{total}$ and the calculated value of the total scattering intensity $Is_{total}$ of the expression (20) at any wavelength is referred to as a difference of the total scattering intensity $Is_{total}$ at the wavelength. For the total scattering intensity $Is_{total}$, the difference of the total scattering intensity $Is_{total}$ at the wavelength is obtained. The calculated value of the total scattering intensity $Is_{total}$ of the expression (20) corresponds to time-averaged data obtained by time-averaging the time-varying characteristic data of the scattering intensity.

In the fitting, in order to obtain the final number of particles, the difference of the first-order autocorrelation function obtained for each wavelength and the difference of the total scattering intensity at the wavelength are used. For example, the evaluation value obtained by adding the value of the square of the difference of the first-order autocorrelation function obtained for each wavelength and the value of the square of the difference of the total scattering intensity at the wavelength for all wavelengths is used. The number of particles at which the evaluation value is minimized is set as the final number of particles.

Accordingly, in the fitting, the number of particles is repeatedly updated in the expressions (19) and (20) such that the evaluation value is minimized to obtain the final number of particles. This corresponds to step S16 described above.

The initial value is set for the number of particles for all the particle sizes, and the number of particles is updated such that the evaluation value is minimized. The final number of particles is obtained for each particle size of the particles to obtain, for example, the histogram of the particles A illustrated in FIG. 11 and the histogram of the particles B illustrated in FIG. 12. That is, the particle size distribution can be obtained by obtaining $N_{d'}{}^{A}$ and $N_{d'}{}^{B}$ for all d' = $d_0$ to $d_M$. This corresponds to step S18 described above. The particle size distribution is a distribution of the number of particles with respect to the particle size, and is, for example, indicated by units of %.

The above-described steps are steps of obtaining the particle size distribution for each of the plurality of particle types. The evaluation value used for the fitting is not limited to the above-described evaluation value.

The first-order autocorrelation function of the following expression (19) is a value obtained by measurement, and in a case in which the particles have the property of absorbing light, the particle size changes depending on the intensity of the incident light as described above. On the other hand, the expression (20) is a theoretical value, and the particle size of the expression (20) is a particle size not affected by the intensity of the incident light. Therefore, the particle size of the expression (19) does not match the particle size of the expression (20). The particle size d' of the autocorrelation function of the expression (19) is set to a state in which the particle size of the expression (19) and the particle size of the expression (20) match each other using the measured particle size, that is, the particle size $d_0$ that does not depend on the intensity of the incident light, which is obtained in advance. In this state, the particle size is used as a fitting parameter, and the number of particles is used as a variable to fit the time-varying characteristic data of the plurality of scattered electric fields or scattering intensities and the plurality of time-averaged scattered electric field data or time-averaged scattering intensity data to the theoretical expression defining the relationship between the particle size and the scattering intensity to obtain the particle size distribution of the particles. As a result, the particle size distribution of the particles contained in the dispersion liquid containing the particles having the property of absorbing light can be measured with high accuracy.

In the optical measurement device 20b, the type of the particles in the dispersion liquid can be determined by using the difference in the scattering intensity with respect to the wavelength. Therefore, the type of the particles and the particle size distribution of the particles can be obtained by specifying the relationship between the type of the particles and the scattering intensity with respect to the wavelength in advance. It is preferable to store the relationship between the type of the particles and the interference light intensity with respect to the wavelength in the storage section 55. In the processing section 38, the type of the particles and the relationship between the type of the particles and the interference light intensity with respect to the wavelength are read out from the storage section 55, and the type of the particles and the particle size distribution of the particles can be obtained.

As described above, the final number of particles is obtained by fitting the expressions (19) and (20), which are two theoretical expressions, to the measured first-order autocorrelation function and the measured total scattering intensity $Is_{total}$. However, the optimization method of the fitting is not limited to the method described above, and, for example, Bayesian optimization can be used for the fitting.

As described above, the first-order autocorrelation function is used in a case of obtaining the number of particles, but the present invention is not limited to this, and the power spectrum can also be used instead of the first-order autocorrelation function.

In addition, as described above, by fitting the autocorrelation function or the power spectrum of the scattering intensity and the scattering intensity for each wavelength to the theoretical expression, the number of particles and the particle size distribution for each particle type can be obtained for the particle A and the particle B. In addition, in a case in which the dispersion liquid contains an impurity component, the impurity component and the particle size distribution for each particle type can be obtained, so that the influence of the impurity component can be separated. In addition to the theoretical expression, the time-varying characteristic data of the scattering intensity derived from the scattering characteristics of the known particles and the time-averaged scattered electric field data or the time-averaged scattering intensity data can also be used for the fitting.

Although the example has been described where the number of wavelengths is two, the number of wavelengths is not limited to two, and the number of wavelengths may be three or four as long as the number of wavelengths is plural.

In addition, the example has been described in which the particle size distribution for each of the plurality of particle types is calculated from the time-averaged scattered electric field data or the time-averaged scattering intensity data and the time-varying characteristic data by fitting or the like as described above, but the present invention is not limited to this. For example, the particle size for each of the plurality of particle types can also be calculated from the time-averaged scattered electric field data or the time-averaged scattering intensity data and the time-varying characteristic data. In this case, for example, an average value of the particle size for each particle is calculated from the particle size distribution for each of the plurality of particle types. The average value of the particle size for each particle type is defined as the particle size of each particle. The average value of the particle size for each particle type is calculated by the particle size calculation section 38b.

It is also possible to obtain the complex refractive index. As described above, the real part of the complex refractive index is a so-called refractive index. The imaginary part of the complex refractive index is referred to as an extinction coefficient representing absorption.

The conversion section 54 (see FIG. 9) can convert the plurality of scattering intensity data obtained by the first detection unit 52a into the time-varying characteristic data of the scattering intensity and the time-averaged scattered electric field data or the time-averaged scattering intensity data, fit the acquired time-varying characteristic data of the scattering intensity and the time-averaged scattered electric field data or the time-averaged scattering intensity data by using a theoretical expression defining the relationship between the refractive index, the particle size, and the scattering intensity or simulation based on the theory of electromagnetic-wave behavior, specify a combination of the number of the plurality of particle types in the dispersion liquid, the refractive index of the particles, and the particle size distribution of the particles by the fitting, and specify a material for each particle type of the particles specified in the dispersion liquid. The fitting will be described later.

In this case as well, the scattered light obtained by causing the incident light from the light source 22 to be incident on the dispersion liquid Lq while varying the intensity of the incident light is measured a plurality of times to obtain a plurality of scattering intensity data, and the plurality of scattering intensity data are converted into the time-varying characteristic data of the plurality of scattered electric fields or scattering intensities as in the optical measurement device 20 described above. Then, the measured particle size of the particles is obtained by using the time-varying characteristic data of the plurality of scattered electric fields or scattering intensities. The measured particle size of the particles is obtained first, and then the measured particle size is used in a case of obtaining the particle size distribution.

In addition to the theoretical expression defining the relationship between the particle size and the scattering intensity, the time-varying characteristic data of the scattering intensity of the measurement parameter calculated by the simulation based on the theory of electromagnetic-wave behavior and the time-averaged scattered electric field data or the time-averaged scattering intensity data of the calculated measurement parameter may be used.

In the processing section 38, the time-varying characteristic data of the scattering intensity of the calculated measurement parameter is calculated as described above.

In a case in which the scattered light of the dispersion liquid is measured, the scattering angle is used as the measurement parameter. In a case in which the measurement parameter is the scattering angle, the value of the scattering angle is varied to two or more angles as the value of the measurement parameter to measure the scattered light of the dispersion liquid. In this case, for example, the measurement wavelength is fixed to one.

In a case in which the measurement parameter is the measurement wavelength of the measurement light, the scattered light of the dispersion liquid is measured using two or more measurement wavelengths. In this case, for example, the scattering angle is fixed to one. The two wavelengths are values of the measurement parameter.

The measurement parameter may be the scattering angle and the measurement wavelength. In this case, the value of the scattering angle is set to two or more angles, the measurement wavelength is set to two or more wavelengths, and the scattered light of the dispersion liquid is measured by a combination of each scattering angle and each measurement wavelength.

The value of the scattering angle is not particularly limited as long as the scattering angles are two or more angles, and is determined as appropriate from the number of data of the scattering intensity data, the measurement time, and the like. The value of the scattering angle is preferably more than 0° and 180°.

In addition, the measurement wavelength is not particularly limited as long as the measurement wavelengths are two or more wavelengths. The measurement wavelength is determined as appropriate in consideration of the fact that a large number of light sources are required or an optical element for separating the wavelengths is required as the number of measurement wavelengths increases.

In addition, the measurement wavelength is not particularly limited, and light of each wavelength such as ultraviolet light, visible light, and infrared light can be used as appropriate.

As described above, the scattering intensity can be measured by one measurement device together with the light scattering measurement method or the device, but may be used in combination by using measurement data of two different devices of a dynamic light scattering measurement device and a light scattering goniophotometer. In a case of the wavelength, a spectrometer may be used. As described above, the device is not limited to, for example, the optical measurement device 20b illustrated in FIG. 9.

The particles contained in the dispersion liquid are at least one type, and there are a plurality of types. That is, it is assumed that there are a plurality of types of particles in the dispersion liquid, a theoretical expression defining the relationship between the refractive index, the particle size, and the scattering intensity is set, and the material for each particle type is specified.

(Fifth Example of Optical Measurement Method)

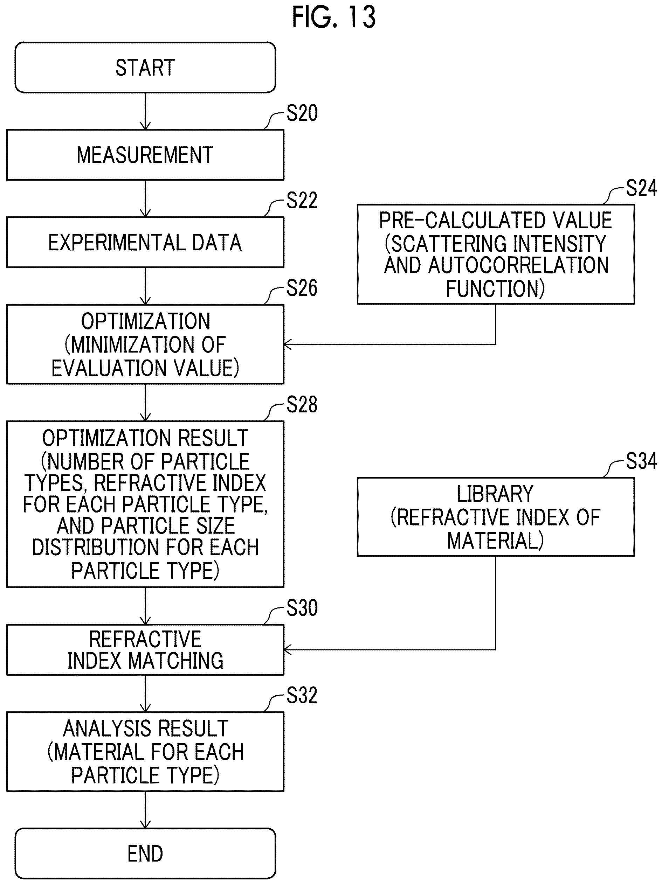

FIG. 13 is a flowchart illustrating a fifth example of the optical measurement method of the embodiment of the present invention.

In the fifth example of the optical measurement method, the measured particle size is obtained before a measurement step (step S20) of FIG. 13.

In the fifth example of the optical measurement method, the measurement parameter is the scattering angle, and the scattering intensity of the scattered light of the dispersion liquid is measured while varying the value of the scattering angle to two or more angles.

As illustrated in FIG. 13, the fifth example of the optical measurement method includes, for example, the measurement step (step S20), a step (step S22) of obtaining experimental data, a step (step S24) of obtaining a pre-calculated value, a step (step S26) of optimization, a step (step S28) of obtaining an optimization result, a step (step S30) of performing matching of the refractive index, and a step (step S32) of obtaining an analysis result. The optical measurement method further includes a step (step S34) of preparing a library. In the step (step S32) of obtaining the analysis result, the material for each particle type of the particles contained in the dispersion liquid is specified.

The library associates the materials and the refractive indexes of the materials with each other. The refractive index of the library is a measured value or a value described in the documents and the like. Further, the refractive index may be a complex refractive index. For example, the library is stored in the storage section 55.

In addition, in the processing section 38, the matching of the refractive index using the refractive index of the material of the library is performed. In addition, the processing section 38 calculates a pre-calculated value described later, and performs a series of processing of calculating the pre-calculated value.

In the measurement step (step S20), at least one of the scattering angle or the measurement wavelength is set as the measurement parameter, and the value of the set measurement parameter is varied a plurality of times to measure the scattering intensity of the scattered light emitted from the dispersion liquid by the measurement light a plurality of times. In the measurement step (step S20), for example, the time fluctuation of the scattering intensity and the scattering angle dependence of the time average value of the scattering intensity are measured.

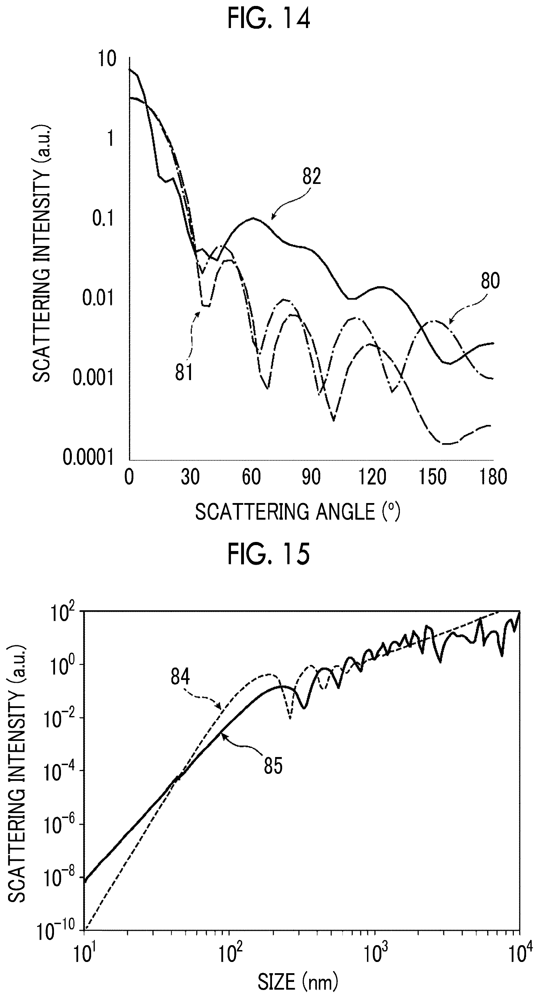

In the step (step S22) of obtaining the experimental data, for example, the autocorrelation function with respect to the time fluctuation of the scattering intensity is obtained based on the measured value of the measurement step (step S20). Further, the scattering angle dependence or the wavelength dependence of the time average value of the scattering intensity is obtained. As a result, for example, the scattering intensity for each scattering angle illustrated in FIG. 14 is obtained.

Here, FIG. 14 is a graph showing calculated values of the scattering angle and the scattering intensity for each refractive index of the particles having the same particle size, and shows a profile of the scattering intensity obtained by calculation. In FIG. 14, reference numeral 80 denotes a profile showing a relationship between the scattering angle and the scattering angle at the refractive index of 1.48. Reference numeral 81 denotes a profile showing a relationship between the scattering angle and the scattering angle at the refractive index of 1.59. Reference numeral 82 denotes a profile showing a relationship between the scattering angle and the scattering angle at the refractive index of 2.2. As illustrated in FIG. 14, even in a case of the particles having the same particle size, the profile of the scattering intensity with respect to the scattering angle is different in a case in which the refractive index is different.

In the step (step S24) of obtaining the pre-calculated value, for example, a calculated value of the scattering intensity is obtained by using a theoretical expression defining the relationship between the refractive index, the particle size, and the scattering intensity or simulation based on the theory of electromagnetic-wave behavior. Further, the time-varying characteristic data of the scattering intensity of the measurement parameter calculated by the theoretical expression defining the relationship between the refractive index, the particle size, and the scattering intensity and the time-averaged scattered electric field data or the time-averaged scattering intensity data of the calculated measurement parameter are obtained. Alternatively, the time-varying characteristic data of the scattering intensity of the measurement parameter calculated by the simulation based on the theory of electromagnetic-wave behavior and the time-averaged scattered electric field data or the time-averaged scattering intensity data of the calculated measurement parameter are obtained.

Since the method of calculating the time-averaged scattered electric field data or the time-averaged scattering intensity data in step S24 is the same as the method of calculating the plurality of time-averaged scattered electric field data or time-averaged scattering intensity data of the conversion section 54 described above, the detailed description thereof will be omitted.

In addition, in step S24, a measured value of the scattering intensity using the known particles such as the standard particles may be obtained. The pre-calculated value obtained in step S24 is used to specify the number of particle types, the refractive index for each particle type, and the number of particles, which will be described later.

In the step (step S26) of optimization, for example, a theoretical expression of the autocorrelation function and the scattering intensity is fitted to the autocorrelation function of the time fluctuation of the scattering intensity and the time average value of the scattering intensity obtained in step S22. In step S26, the initial value is set for the number of particle types of the particles contained in the dispersion liquid, the refractive index for each particle type, and the number of particles, and the number of particles, the values are updated such that the evaluation value is minimized, and a combination of the final number of particle types of the particles, the final refractive index for each particle type, and the final number of particles is specified. In addition, the initial value is set by generating a random variable.

Next, after obtaining the optimization result (step S28), the matching between the refractive index for each particle type of the particles for which the combination of the number of particle types of the plurality of particles in the dispersion liquid, the refractive index of the particles, and the particle size distribution of the particles is specified by the fitting and the refractive index of the material of the library is performed (step S30). As a result, the material for each particle type of the plurality of types of particles contained in the dispersion liquid is specified, and the material for each particle type of the plurality of types of particles contained in the dispersion liquid is obtained as the analysis result (step S32). In the matching of the refractive index (step S30), for example, the refractive index difference with the smallest square thereof is selected. Further, the refractive index of the material is prepared in advance as the library (step S34).

Hereinafter, the light scattering measurement method will be described in more detail, including the fitting.

First, for example, laser light having a specific wavelength is incident on the dispersion liquid Lq from the light source 22 of the optical measurement device 20b illustrated in FIG. 9. The scattered light obtained by scattering the incident light is detected by the second detection unit 52b at different scattering angles. As a result, the signals (scattering intensity) of the scattered light of the dispersion liquid Lq at different scattering angles can be obtained. The value of the scattering angle is two or more angles. The above-described step is the measurement step, which corresponds to step S20 (see FIG. 13).

Next, the conversion section 54 calculates, for example, the autocorrelation function or the power spectrum as the time-varying characteristic data of the scattering intensity from the time dependence of the scattering intensity of the dispersion liquid Lq obtained by the measurement step by using a known method. In this way, the time-varying characteristic data of the scattering intensity is obtained for each scattering angle. The plurality of time-varying characteristic data are obtained.

Then, in the conversion section 54, the time-averaged scattered electric field data or the time-averaged scattering intensity data is acquired from the signal of the scattered light of the dispersion liquid obtained by the measurement step.

The time-averaged scattered electric field data or the time-averaged scattering intensity data of the dispersion liquid is obtained, for example, by calculating the time average value of the scattering intensity from the signal of the scattered light of the dispersion liquid for each scattering angle. As a result, the data of the scattering intensity for each scattering angle as illustrated in FIG. 14 is obtained.

The step of acquiring the time-varying characteristic data of the scattering intensity of the dispersion liquid and the time-averaged scattered electric field data or the time-averaged scattering intensity data of the dispersion liquid is the second conversion step, which corresponds to step S22.

Next, in the processing section 38, the time-varying characteristic data of the scattering intensity of the scattering angle of two or more angles and the plurality of time-averaged scattered electric field data or time-averaged scattering intensity data are fitted by using a theoretical expression defining the relationship between the refractive index, the particle size, and the scattering intensity or simulation based on the theory of electromagnetic-wave behavior. By the above-described fitting, a combination of the number of particle types of the plurality of particles in the dispersion liquid, the refractive index of the particles, and the particle size distribution of the particles is specified. This corresponds to steps S26 and S28.

As described above, at least one type of particle is contained in the dispersion liquid.

As described above, the first-order autocorrelation function is represented by $g^{(1)}(\tau) = \exp(-Dq^2\tau)$. A relationship between the diffusion coefficient obtained from the autocorrelation function and the particle size is applied to the Stokes-Einstein expression (see the expression (1)) used in a normal dynamic light scattering method.

In a case in which the particles have a particle size distribution, the first-order autocorrelation function is represented by the following expression (21). In addition, the scattering intensity is represented by the following expression (22). The following expressions (21) and (22) are theoretical expressions. $I_\theta^{total}$ of the expressions (21) and (22) is a calculated value and corresponds to the time-averaged scattered electric field data or the time-averaged scattering intensity data.

The first-order autocorrelation function of the expression (21) is a value obtained by measurement, and in a case in which the particles have the property of absorbing light, the particle size changes depending on the intensity of the incident light as described above. On the other hand, the expression (22) is a theoretical value, and the particle size of the expression (22) is a particle size not affected by the intensity of the incident light. Therefore, the particle size of the expression (21) does not match the particle size of the expression (22). Therefore, the particle size of the expression (21) and the particle size of the expression (22) are set to a state of matching each other by using the measured particle size, that is, the particle size $d_0$ that does not depend on the intensity of the incident light, which is obtained in advance. In this state, the particle size is used as a fitting parameter, and the number of particles is used as a variable to fit the time-varying characteristic data of the plurality of scattered electric fields or scattering intensities and the plurality of time-averaged scattered electric field data or time-averaged scattering intensity data to the theoretical expression defining the relationship between the particle size and the scattering intensity as described above to obtain the particle size distribution of the particles and the relative complex refractive index m.

$$g_\theta^{(1)}(\tau) = \sum_{d'=d_0}^{d_M} \frac{N_{d'} \cdot Is_\theta(d', m)}{Is_\theta^{total}} exp(-D_{d'} q^2 \tau) \qquad (21)$$

$$Is_\theta^{total} = \sum_{d_0=d}^{d_M} N_{d_0} Is_\theta (d',m) \qquad (22)$$

In the expression (21), $g^{(1)}$ indicates the first-order autocorrelation function. The first-order autocorrelation function of the expression (21) is the first-order autocorrelation function for each scattering angle. The scattering intensity of the expression (22) is the scattering intensity for each scattering angle. Therefore, the expressions (21) and (22) are obtained for each scattering angle to be measured.

In the expressions (21) and (22), $Is_\theta^{total}$ indicates the total scattering intensity. In addition, d' and $d_0$ indicate the particle size. The subscripts 0 to M of d' and $d_0$ indicate the ordinal numbers of the bins of the histogram of the particles. N indicates the number of particles. D indicates the diffusion coefficient. The subscript d' of the diffusion coefficient D indicates the dependence on the particle size d'. In addition, q indicates the scattering vector. $\tau$ indicates the time lag of the first-order autocorrelation function. $\theta$ indicates the scattering angle. Is indicates the scattering intensity. The subscript d' of the scattering intensity Is indicates the dependence on the particle size d'. The subscript $\theta$ of the scattering intensity Is indicates the dependence on the scattering angle $\theta$. The bin of the histogram is a data interval of the histogram, and is indicated by a bar in the histogram.

The part of $N_{d'} Is_{d', \theta}/Is_\theta^{total}$ indicates a ratio of the scattering intensity due to all single particles belonging to the bin of the particle size d' to the total scattering intensity.

The scattering intensity for the particles having the particle size d' and the relative complex refractive index m is given by the following expression by the Mie scattering theory. The following expression is a theoretical expression defining the relationship between the refractive index, the particle size, and the scattering intensity.

$$Is_\theta (d',m) = \frac{\lambda^2}{4\pi^2} \left| \sum_{i=1}^{\infty} (-i)^1 \Big|_{A_1} p_{1C\cos\theta\sin\theta - B} \frac{p(\cos\theta)}{\sin\theta} \right|_1^2$$

Here, $P_1$ is a function obtained by differentiating a Legendre polynomial with respect to $\theta$, and the subscript 1 indicates a degree of the Legendre polynomial. $\lambda$ indicates a wavelength in the solvent. In addition, d is a particle size, r is a distance from the particle, and m is a relative complex refractive index of the particle with respect to the medium. In a case in which a refractive index of the solvent is denoted by $n_0$ and a refractive index of the particle is denoted by n, $m = n/n_0$. Furthermore, coefficients $A_1(m, d')$ and $B_1(m, d')$ are given by the following expression. In the following expression, the symbol of the single quotation mark (') attached to $\psi$ and $\zeta$ is a differential with respect to a factor in each function, and is different from the meaning of the single quotation mark (') attached to d.

$$A_1(m,d') = i^{l+1} \frac{2l+1}{l(l+1)} \frac{m\psi_1'(x)\psi_1(mx) - \psi_1(x)\psi_1'(mx)}{m\zeta_1'(x)\psi_1(mx) - \zeta_1(x)\psi_1'(mx)}$$

$$B_1(m,d') = i^{l+1} \frac{2l+1}{l(l+1)} \frac{m\psi_1(x)\psi_1'(mx) - \psi_1'(x)\psi_1(mx)}{m\zeta_1(x)\psi_1'(mx) - \zeta_1'(x)\psi_1(mx)}$$

Here, x is represented by the following expression. In addition, $\psi(\rho)$ and $\zeta_1(\rho)$ are represented by the following expression, and, in the following expression, J is a Bessel function and $\zeta$ is a Hankel function.

$$x(d) = \frac{\pi d}{\lambda}$$

$$\psi_l(\rho) = \sqrt{\frac{\pi\rho}{2}} J_{l+\frac{1}{2}}(\rho)$$

$$\zeta_l(\rho) = \sqrt{\frac{\pi\rho}{2}} H_{l+\frac{1}{2}}(\rho)$$

In a case in which the number of particle types is 2, the number of terms is two, and the above expressions (21) and (22) are represented by the following expressions (23) and (24). In a case in which the number of particle types is three or more, the same applies as in a case in which the number of types of particles is two.

$$g_\theta^{(1)}(\tau) = \sum_{d'=d_0}^{d_M} \frac{N_{d'}^A I_{d'}^A(d',m)}{Is_\theta^{total}} exp(-D_{d'}q^2\tau) + \sum_{d'=d_0}^{d_M} \frac{N_{d'}^B I_{d'}^B(d',m)}{Is_\theta^{total}} exp(-D_{d'}q^2\tau) \qquad (23)$$

$$Is_\theta^{total} = \sum_{d_0=d}^{d_M} N_{d_0}^A Is_\theta^A(d',m) + \sum_{d_0=d}^{d_M} N_{d_0}^B Is_\theta^B(d',m) \qquad (24)$$

(Second Example of Fitting)

Hereinafter, the fitting for specifying the number of particle types of the particles contained in the dispersion liquid and the material for each particle type will be described.

The second-order autocorrelation function $g^{(2)}(\tau)$ is measured for each scattering angle, and it is desirable that the scattering angle is two or more angles, but the scattering angle may be one angle. The number of scattering angles to be measured is determined as appropriate in accordance with the number of variables to be obtained or the number of time-averaged scattered electric field data or time-averaged scattering intensity data of the measurement parameter.

In the fitting, for the first-order autocorrelation function for each scattering angle, in the expression (21), (23), or the same expression in a case of three or more particle types, the number of particle types, the refractive index for each particle type, and the number of particles are used as variables to set the initial number of particles. The calculated value of the first-order autocorrelation function of the expression (21) based on the set initial number of particles is obtained. The calculated value of the second-order autocorrelation function $g^{(2)}(\tau) = 1 + \beta g \cdot |g^{(1)}(\tau)|^2$ is obtained from the calculated value of the first-order autocorrelation function. Here, $\beta g$ is a device constant.

For each scattering angle, a difference between the measured value of the second-order autocorrelation function and the calculated value of the second-order autocorrelation function is obtained. The difference between the measured value of the second-order autocorrelation function and the calculated value of the second-order autocorrelation function is referred to as a difference of the second-order autocorrelation function. The difference of the second-order autocorrelation function is obtained for each scattering angle. The calculated value of the second-order autocorrelation function for each scattering angle corresponds to the time-varying characteristic data of the scattering intensity of the measurement parameter calculated by the theoretical expression.

The total scattering intensity $Is^{total}$ is measured for each scattering angle. In the expressions (22) and (24), or the same expression in a case of three or more particle types, a value of the total scattering intensity $Is_\theta^{total}$ of the expressions (22) and (24), or the same expression in a case of three or more particle types based on the set initial value is obtained.

For each scattering angle, a difference between the measured value of the total scattering intensity $Is^{total}$ as illustrated in FIG. 14 and the calculated value of the total scattering intensity $I_\theta^{total}$ of the expressions (22) and (24), or the same expression in a case of three or more particle types is obtained. A difference between the measured value of the total scattering intensity $I_\theta^{total}$ and the calculated value of the total scattering intensity $I_\theta^{total}$ of the expressions (22) and (24), or the same expression in a case of three or more particle types at any scattering angle is referred to as a difference of the total scattering intensity $Is^{total}$ at the scattering angle. For the total scattering intensity $Is^{total}$, the difference of the total scattering intensity $Is^{total}$ at the scattering angle is obtained. The calculated value of the total scattering intensity $I_\theta^{total}$ of the expressions (22) and (24) and the like corresponds to the time-averaged scattered electric field data or the time-averaged scattering intensity data of the measurement parameter calculated by the theoretical expression.

In the fitting, in order to obtain the final number of particle types of the particles, the final refractive index for each particle type, and the final number of particles, the difference of the second-order autocorrelation function obtained for each scattering angle and the difference of the total scattering intensity at the scattering angle are used. For example, the evaluation value obtained by adding the value of the square of the difference of the second-order autocorrelation function obtained for each scattering angle and the value of the square of the difference of the total scattering intensity at the scattering angle for all scattering angles is used. A combination of the number of particle types, the refractive index for each particle type, and the number of particles at which the evaluation value is minimized is set as a combination of the final number of particle types, the final refractive index for each particle type, and the final number of particles. Since the particle types and the number of particles are obtained, the particle size distribution for each particle type is obtained.

In the fitting, the number of particle types, the relative complex refractive index m for each particle type, and the number of particles are repeatedly updated in the expressions (23) and (24) or the like in accordance with the number of particle types such that the evaluation value is minimized, to obtain the final number of particles and the final relative complex refractive index m. This corresponds to step S26. In the fitting, in a case of repeatedly updating the number of particle types, the relative complex refractive index m for each particle type, and the number of particles such that the evaluation value is minimized, for example, the number of particle types, the relative complex refractive index m for each particle type, and the number of particles are updated by using a genetic algorithm. As a result, the number of particle types, the relative complex refractive index m for each particle type, and the number of particles can be more reliably updated.

In the fitting, the values of the number of particles and the relative complex refractive index m are updated in the expressions (23) and (24) or the like in accordance with the number of particle types by reflecting the expression indicating the relative complex refractive index m described above, and the fitting between the measured value and the calculated value is performed to obtain the final number of particles and the final relative complex refractive index m. The refractive index is fitted through the expression representing the above-described relative complex refractive index m.

By obtaining the number of particles with respect to the particle size of all particle types, the histogram of the particles can be obtained. That is, by obtaining $N_{d'}^{,A}$ ... for all d' = $d_0$ to $d_M$ in the particles, the particle size distribution of the particles can be obtained for all particle types.

The above-described step is a step of obtaining a combination of the number of particle types, the relative complex refractive index m for each particle type, and the particle size distribution (step S28). The evaluation value used for the fitting is not limited to the above-described evaluation value.

The matching between the refractive index for each particle type finally obtained and the refractive index of the material of the library is performed (step S30), and the material for each particle type is obtained as the analysis result (step S32). The matching is performed, for example, by selecting the refractive index difference with the smallest square between the refractive index of the obtained particles and the refractive index of the material of the library.

The above-described step is a step of specifying the material for each particle type of the unknown particles contained in the dispersion liquid. The evaluation value used for the fitting is not limited to the above-described evaluation value.

The first-order autocorrelation function of the expression (23) is a value obtained by measurement, and in a case in which the particles have the property of absorbing light, the particle size changes depending on the intensity of the incident light as described above. On the other hand, the expression (24) is a theoretical value, and the particle size of the expression (24) is a particle size not affected by the intensity of the incident light. Therefore, the particle size of the expression (23) does not match the particle size of the expression (24). Therefore, in the expressions (23) and (24) as well, the particle size of the expression (23) and the particle size of the expression (24) are set to a state of matching each other by using the measured particle size, that is, the particle size $d_0$ that does not depend on the intensity of the incident light, which is obtained in advance. In this state, the particle size is used as a fitting parameter, and the number of particles is used as a variable to fit the theoretical expression defining the relationship between the particle size and the scattering intensity to obtain the particle size distribution of the particles and the relative complex refractive index m.

In addition to the scattering angle, a result of the measurement at a different wavelength can also be added to obtain the wavelength dependence of the refractive index. That is, the combination of the number of particle types, the refractive index for each particle type, and the particle size distribution can also be obtained by measuring the scattered light intensity using two or more wavelengths as a plurality of measurement wavelengths to obtain data of a plurality of scattered light beams. In this case, the scattering angle may be one angle or may be a plurality of (two or more) angles.

The wavelength dependence of the refractive index can be obtained by varying the measurement wavelength. The wavelength dependence of the refractive index is also referred to as refractive index dispersion. In a case in which the measurement wavelength is used as the measurement parameter, the measurement wavelength is not limited to two as long as there are a plurality of measurement wavelengths, and may be three or four.

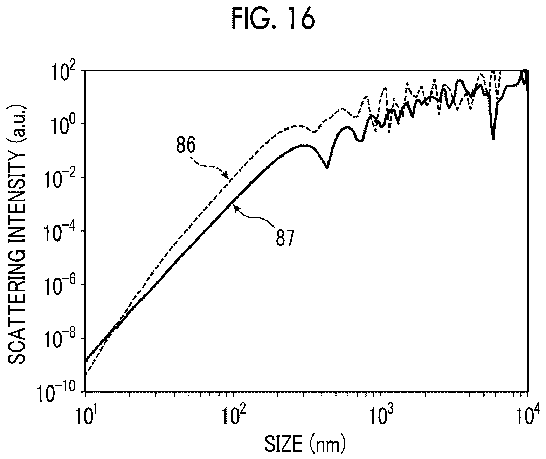

Here, FIGS. 15 and 16 illustrate a relationship between the scattering intensity and the measurement wavelength. FIG. 15 illustrates the scattering intensities of two types of particles having different refractive indexes calculated at the measurement wavelength of 488 nm. As illustrated in FIG. 15, a profile 84 of the scattering intensity of a first particle and a profile 85 of the scattering intensity of a second particle are different.

FIG. 16 illustrates the scattering intensities of two types of particles calculated at the measurement wavelength of 632.8 nm. As illustrated in FIG. 16, a profile 86 of the scattering intensity of the first particle and a profile 87 of the scattering intensity of the second particle are different. As illustrated in FIGS. 15 and 16, the scattering intensity with respect to the measurement wavelength is different depending on the difference in refractive index. The particle type can be specified using this point.

For example, the time-averaged scattered electric field data or the time-averaged scattering intensity data of the dispersion liquid is obtained by calculating the time average value of the scattering intensity of the dispersion liquid for each laser light wavelength.

In addition, the optimization method of the fitting is not limited to the method described above, and, for example, Bayesian optimization can be used for the fitting.

As described above, although the second-order autocorrelation function is used in calculating the number of particle types of the particles contained in the dispersion liquid, the refractive index of each particle type, and the number of particles, the present invention is not limited to this, and a power spectrum can also be used instead of the second-order autocorrelation function. In addition, in a case in which the first-order autocorrelation function is measured by heterodyne detection, the first-order autocorrelation function may be used.

In addition to the theoretical expression, the time-varying characteristic data of the scattering intensity of the measurement parameter calculated by the simulation and the time-averaged scattered electric field data or the time-averaged scattering intensity data of the calculated measurement parameter can also be used for the fitting.

(Sixth Example of Optical Measurement Method)

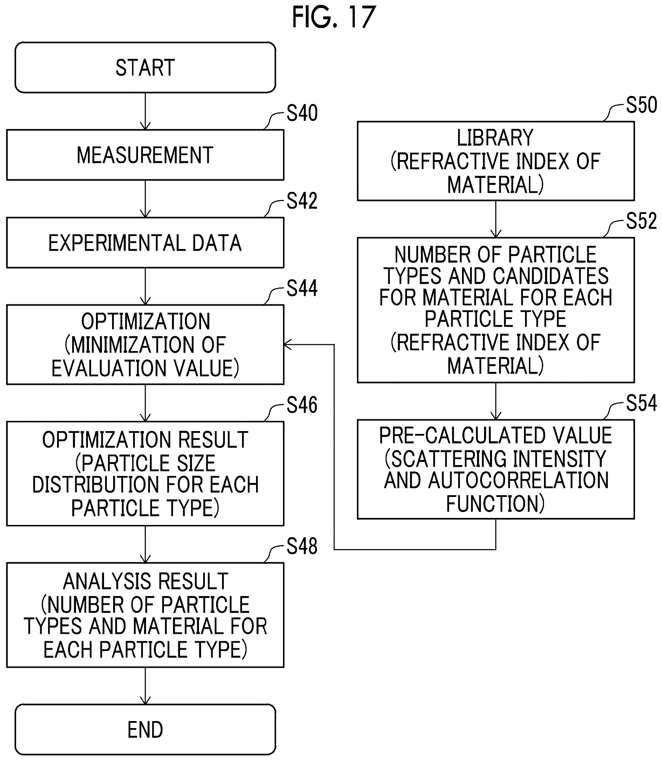

FIG. 17 is a flowchart illustrating a sixth example of the optical measurement method of the embodiment of the present invention.

In the sixth example of the optical measurement method, the same steps as those of the fifth example of the optical measurement method illustrated in FIG. 13 will not be described in detail.

The sixth example of the optical measurement method is different from the fifth example of the optical measurement method in that the optimization is evaluated and the refractive index of the library is used for the pre-calculated value, and is the same method as the fifth example of the optical measurement method in other aspects.

In the sixth example of the optical measurement method, the measured particle size is obtained before the measurement step (step S10) of FIG. 10.

In the sixth example of the optical measurement method, as in the fifth example of the optical measurement method, the optical measurement method includes a measurement step (step S40), a step (step S42) of obtaining experimental data, a step (step S44) of optimization, a step (step S46) of obtaining an optimization result, and a step (step S48) of obtaining an analysis result. Further, the optical measurement method includes a step (step S50) of preparing a library, a step (step S52) of listing the number of particle types and candidates for the material for each particle type by using the library, and a step (step S54) of obtaining a pre-calculated value. In the step (step S48) of obtaining the analysis result, the material for each particle type of the particles contained in the dispersion liquid is specified.

The measurement step (step S40), the step (step S42) of obtaining experimental data, and the step (step S44) of optimization are the same steps as the measurement step (step S20), the step (step S22) of obtaining experimental data, and the step (step S26) of optimization of the fifth example of the optical measurement method, respectively, and thus the detailed description thereof will be omitted.

In the sixth example of the optical measurement method, the number of particle types and the candidates for the material for each particle type are selected by using the prepared library (step S50) (step S52). The pre-calculated value is obtained based on the selected number of particle types and the candidates for the material for each particle type (step S54).

In steps S50, S52, and S54, the refractive index data of the candidate material is extracted from the library as the initial value for the number of candidate particle types (step S50). Further, an initial value of the particle size distribution of the candidate particle type is prepared (step S52). The scattering intensity and the second-order autocorrelation function are calculated by using the refractive index data of the candidate particle type and the initial value of the particle size distribution of the candidate particle type (step S54). As the pre-calculated value, the number of particle types and the candidates for the material for each particle type are set, and the calculated value of the scattering intensity and the calculated value of the second-order autocorrelation function are obtained.

On the other hand, in step S42, the measured value of the scattering intensity for each scattering angle is obtained. Further, the second-order autocorrelation function $g^{(2)}(\tau)$ is measured for each scattering angle.

In the step (step S44) of optimization, the measured value of step S42 and the pre-calculated value of step S54 are compared and fitted. In this case, for example, as in the third example of the fitting, the difference of the second-order autocorrelation function obtained for each scattering angle and the difference of the total scattering intensity at the scattering angle are used. For example, the evaluation value obtained by adding the value of the square of the difference of the second-order autocorrelation function obtained for each scattering angle and the value of the square of the difference of the total scattering intensity at the scattering angle for all scattering angles is used.

The refractive index data of the candidate particle type is extracted from the library (step S50), the particle size distribution of the candidate particle type is set (step S52), and the scattering intensity and the second-order autocorrelation function are calculated for the candidate particle type (step S54) such that the evaluation value is minimized. A combination of the number of particles at which the evaluation value is minimized, the candidate material at which the evaluation value is minimized, and the number of particle types of the candidate material is obtained. This is set as an optimal solution, and a combination of the final number of particle types, the final refractive index for each particle type, and the final particle size distribution in the dispersion liquid is obtained (step S46). As a result, the number of particle types of the particles contained in the dispersion liquid and the material for each particle type can be specified as the analysis result (step S48).

For example, a genetic algorithm is used for the selection of the number of particle types and the candidates for the material for each particle type (step S52) for obtaining the pre-calculated value (step S54). Further, for example, a genetic algorithm is used for the optimization (step S44) of the particle size distribution, that is, the fitting. In the above-described steps, the reliability of the selection of the number of particle types and the candidates for the material for each particle type (step S52) is increased by using the genetic algorithm. Further, the reliability of the optimization (step S44) of the particle size distribution is also increased.

The number of particle types contained in the dispersion liquid may be determined in advance. That is, the number of particle types may be set in advance as a convergence condition. In this case, in step S50, the refractive index data of the candidate particle type is extracted at the predetermined number of particle types (step S50), the candidates for the material for each particle type are listed (step S52), and the pre-calculation is performed (step S54).

(Third Example of Fitting)

The third example of the fitting is different from the second example of the fitting in that, as described above, the number of particle types and the candidates for the material for each particle type are selected from the library of the refractive index of the material, and the refractive index thereof is used.

In the third example of the fitting, in the fitting, the difference of the second-order autocorrelation function obtained for each scattering angle and the difference of the total scattering intensity at the scattering angle are used to obtain the number of particles. For example, the evaluation value obtained by adding the value of the square of the difference of the second-order autocorrelation function obtained for each scattering angle and the value of the square of the difference of the total scattering intensity at the scattering angle for all scattering angles is used. The number of particles at which the evaluation value is minimized is obtained.

In the fitting, the number of particle types, the relative complex refractive index m for each particle type, and the number of particles are repeatedly updated in the expressions (23) and (24) or the like in accordance with the number of particle types such that the evaluation value is minimized, to obtain the final number of particles and the final relative complex refractive index m. This corresponds to step S26. In the fitting, in a case of repeatedly updating the number of particle types, the relative complex refractive index m for each particle type, and the number of particles such that the evaluation value is minimized, for example, the number of particle types, the relative complex refractive index m for each particle type, and the number of particles are updated by using a genetic algorithm. As a result, the number of particle types, the relative complex refractive index m for each particle type, and the number of particles can be more reliably updated.

In the fitting, the values of the number of particles and the relative complex refractive index m are updated in the expressions (23) and (24) or the like in accordance with the number of particle types by reflecting the expression indicating the relative complex refractive index m described above, and the fitting between the measured value and the calculated value is performed to obtain the final number of particles and the final relative complex refractive index m. The refractive index is fitted through the expression representing the above-described relative complex refractive index m.

In the third example of the fitting, the particle size of the expression (23) does not match the particle size of the expression (24). Therefore, in the expressions (23) and (24) as well, the particle size of the expression (23) and the particle size of the expression (24) are set to a state of matching each other by using the measured particle size, that is, the particle size $d_0$ that does not depend on the intensity of the incident light, which is obtained in advance. In this state, as described above, the time-varying characteristic data of the plurality of scattered electric fields or scattering intensities and the plurality of time-averaged scattered electric field data or time-averaged scattering intensity data are fitted to the theoretical expression defining the relationship between the particle size and the scattering intensity to obtain the particle size distribution of the particles and the relative complex refractive index m.

As described above, the number of particles at which the evaluation value is minimized, the candidate material of the number of particles at which the evaluation value is minimized, and the number of particle types of the candidate material are set as an optimal solution to obtain a combination of the final number of particle types, the final refractive index for each particle type, and the final particle size distribution (step S46). As a result, the number of particle types of the particles contained in the dispersion liquid and the material for each particle type can be specified as the analysis result (step S48).

The above-described step is a step of specifying the material for each particle type contained in the dispersion liquid.

The evaluation value used for the fitting in the third example of the fitting is not limited to the above-described evaluation value.

In the third example of the fitting, as in the second example of the fitting, the wavelength dependence of the refractive index can be obtained by varying the measurement wavelength and performing the measurement as described above at two or more wavelengths as a plurality of measurement wavelengths. In a case in which the measurement wavelength is varied, the number of measurement wavelengths is not limited to two, and the number of measurement wavelengths may be three or four as long as the number of measurement wavelengths is plural.

As described above, the scattered light obtained by causing the incident light to be incident on the dispersion liquid containing the particles while varying the intensity of the incident light is measured a plurality of times to obtain a plurality of scattering intensities and a plurality of scattering intensity data, and the plurality of scattering intensity data are converted into the time-varying characteristic data of the plurality of scattered electric fields or scattering intensities, but the present invention is not limited to this.

For example, the scattered light obtained by causing the incident light to be incident while varying the intensity of the incident light can be measured a plurality of times, and the time-varying characteristic data of the plurality of scattered electric fields or scattering intensities can be acquired from the plurality of scattered light beams. In this case, for example, in the optical measurement device, by using an autocorrelator (correlation meter) for detecting the scattered light, the signals of the scattered light measured a plurality of times can be converted into the time-varying characteristic data of the plurality of scattered electric fields or scattering intensities to obtain, for example, a plurality of autocorrelation functions without obtaining the scattering intensity data in the measurement section. In this case, in the measurement step, the scattered light is measured a plurality of times. The plurality of autocorrelation functions obtained by converting the signals of the scattered light measured a plurality of times are used to measure the particle size and the particle size distribution as described above.

In addition, the disposition position of the autocorrelator in the optical measurement device is not particularly limited as long as the scattered light can be detected to obtain the signals of the scattered light.

The autocorrelator is not particularly limited so long as an autocorrelation function can be obtained from the scattered light without obtaining the scattering intensity data as described above, and commercially available devices may be used as appropriate.

The present invention is basically configured as described above. Although the optical measurement method and the optical measurement device according to the embodiment of the present invention have been described in detail above, the present invention is not limited to the above-described embodiment, and various improvements or modifications may be made without departing from the gist of the present invention.

Explanation of References

    10a, 10b, 10c, 10d: autocorrelation function
    10e, 10f, 10g: autocorrelation function
    12, 13, 14, 15, 16, 17, 18: straight line
    20, 20a, 20b: optical measurement device
    22: light source
    23a, 23b, 23c, 23d, 23e, 23f: optical fiber
    23g, 23h, 23i, 23j, 23k, 23m: optical fiber
    24: first coupler
    24a, 24b, 34a, 34b, 45a, 45b: end face
    26: circulator
    28: collimating lens
    30: objective lens
    32: sample cell
    34: second coupler
    36: detector

37: measurement section

38: processing section

38a: conversion section

38b: particle size calculation section

38c: particle size distribution calculation section

38d: computation section

40: first collimating lens

42: modulator

43: second collimating lens

44: phase modulation section

45: third coupler

46: measurement unit

50: low-coherence interferometer

52: detection section

52a: first detection unit

52b: second detection unit

54: conversion section

55: storage section

61a, 61b, 61c, 61d: beam splitter

61e: transmissive/reflective surface

62: reflector

62a: reflective surface

63a: dispersion assurance adjustment section

63b: objective lens

64a, 64b: ND filter

65: objective lens

66: polarization adjustment section

67: spectral adjustment section

68: polarization control section

70: mirror

72: diffraction grating

73, 74: photodetector

84, 85, 86, 87: profile

Ld: scattered light

Lq: dispersion liquid

Lr: reference light

Ls: incident light

$\theta b$: scattering angle

**Claims**

1. An optical measurement method for a dispersion liquid containing particles, the optical measurement method comprising:

   a measurement step of measuring, a plurality of times, scattered light obtained by causing incident light to be incident on the dispersion liquid while varying an intensity of the incident light;
   a conversion step of converting signals of the scattered light measured the plurality of times in the measurement step into time-varying characteristic data of a plurality of scattered electric fields or scattering intensities; and
   a particle size calculation step of obtaining particle sizes of the particles by using the time-varying characteristic data of the plurality of scattered electric fields or scattering intensities obtained in the conversion step.

2. The optical measurement method according to claim 1,
   wherein, in the particle size calculation step, the particle sizes of the particles are obtained by analyzing the time-varying characteristic data of the plurality of scattered electric fields or scattering intensities on an assumption that diffusion coefficients of the particles have linear dependence on the intensity of the incident light, and obtaining a relationship between the particle sizes of the particles or the diffusion coefficients of the particles and the intensity of the incident light.

3. The optical measurement method according to claim 2, further comprising:

a step of obtaining a second temperature after the particles at a first temperature have undergone a temperature rise due to light absorption of the incident light; and
a step of obtaining particle sizes of the particles at the second temperature by using an expression representing a diffusion coefficient in a case in which the temperature rise occurs, for the particle sizes of the particles obtained in the particle size calculation step.

4. An optical measurement method for a dispersion liquid containing particles, the optical measurement method comprising:

a measurement step of measuring, a plurality of times, scattered light obtained by causing incident light to be incident on the dispersion liquid while varying an intensity of the incident light;
a conversion step of converting signals of the scattered light measured the plurality of times in the measurement step into time-varying characteristic data of a plurality of scattered electric fields or scattering intensities; and
a particle size distribution calculation step of obtaining a particle size distribution of the particles by using the time-varying characteristic data of the plurality of scattered electric fields or scattering intensities obtained in the conversion step.

5. The optical measurement method according to claim 4,
wherein the particle size distribution calculation step further includes:

a step of obtaining an index value representing temperature dependence of the particle sizes of the particles by using the time-varying characteristic data of the plurality of scattered electric fields or scattering intensities; and
a step of correcting the particle size distribution of the particles obtained in the particle size distribution calculation step by using the index value representing the temperature dependence of the particle sizes of the particles.

6. The optical measurement method according to claim 4, further comprising:

a step of obtaining a second temperature after the particles at a first temperature have undergone a temperature rise due to light absorption of the incident light,
wherein, in the particle size distribution calculation step, the particle size distribution of the particles is obtained by using the second temperature for a diffusion coefficient obtained from the time-varying characteristic data of the plurality of scattered electric fields or scattering intensities.

7. The optical measurement method according to claim 1 or 4,
wherein the scattered light is scattered light obtained by causing the incident light to be incident while varying a value of at least any one of a scattering angle or a measurement wavelength among measurement parameters.

8. The optical measurement method according to claim 1 or 4,

wherein the measurement step is a step of measuring, a plurality of times, a scattering intensity of the scattered light obtained by causing the incident light to be incident on the dispersion liquid while varying the intensity of the incident light to obtain a plurality of scattering intensity data, and
the conversion step is a step of acquiring the time-varying characteristic data of the plurality of scattered electric fields or scattering intensities from the plurality of scattering intensity data obtained in the measurement step.

9. The optical measurement method according to claim 7,

wherein the dispersion liquid contains a plurality of particle types,
the optical measurement method further comprises:

a conversion step of converting signals of a plurality of scattered light beams obtained in the measurement step into a plurality of time-averaged scattered electric field data or time-averaged scattering intensity data; and
a calculation step of calculating a particle size or a particle size distribution for each of the plurality of particle types from the time-averaged scattered electric field data or the time-averaged scattering intensity data and the time-varying characteristic data.

**10.** The optical measurement method according to claim 9,

wherein the measurement step is a step of measuring, a plurality of times, a scattering intensity of the scattered light obtained by causing the incident light to be incident on the dispersion liquid while varying the intensity of the incident light to obtain a plurality of scattering intensity data and a step of measuring, a plurality of times, a scattering intensity of the scattered light obtained by causing the incident light to be incident while varying the value of at least any one of the scattering angle or the measurement wavelength among the measurement parameters to obtain a plurality of scattering intensity data, and

the conversion step is a step of calculating the time-varying characteristic data of the plurality of scattered electric fields or scattering intensities from the plurality of scattering intensity data obtained in the measurement step.

**11.** The optical measurement method according to any one of claims 1 to 6,
wherein the time-varying characteristic data of the scattered electric fields or the scattering intensities is an autocorrelation function or a power spectrum.

**12.** An optical measurement device for a dispersion liquid containing particles, the optical measurement device comprising:

a light source that causes incident light to be incident on the dispersion liquid while varying an intensity of the incident light;

a measurement section that measures, a plurality of times, scattered light obtained by causing the incident light to be incident on the dispersion liquid while varying the intensity of the incident light;

a conversion section that converts signals of the scattered light measured the plurality of times by the measurement section into time-varying characteristic data of a plurality of scattered electric fields or scattering intensities; and

a particle size calculation section that obtains particle sizes of the particles by using the time-varying characteristic data of the plurality of scattered electric fields or scattering intensities obtained by the conversion section.

**13.** The optical measurement device according to claim 12,
wherein the particle size calculation section obtains the particle sizes of the particles by analyzing the time-varying characteristic data of the plurality of scattered electric fields or scattering intensities on an assumption that diffusion coefficients of the particles have linear dependence on the intensity of the incident light, and obtains a relationship between the particle sizes of the particles or the diffusion coefficients of the particles and the intensity of the incident light.

**14.** The optical measurement device according to claim 12,
wherein the particle size calculation section

obtains a second temperature after the particles at a first temperature have undergone a temperature rise due to light absorption of the incident light, and

obtains particle sizes of the particles at the second temperature by using an expression representing a diffusion coefficient in a case in which the temperature rise occurs, for the particle sizes of the particles obtained in the particle size calculation section.

**15.** An optical measurement device for a dispersion liquid containing particles, the optical measurement device comprising:

a light source that causes incident light to be incident on the dispersion liquid while varying an intensity of the incident light;

a measurement section that measures, a plurality of times, scattered light obtained by causing the incident light to be incident on the dispersion liquid while varying the intensity of the incident light;

a conversion section that converts signals of the plurality of scattered light beams obtained by the measurement section into time-varying characteristic data of a plurality of scattered electric fields or scattering intensities; and

a particle size distribution calculation section that obtains a particle size distribution of the particles by using the time-varying characteristic data of the plurality of scattered electric fields or scattering intensities obtained by the conversion section.

**16.** The optical measurement device according to claim 15,

wherein the particle size distribution calculation section

obtains an index value representing temperature dependence of the particle sizes of the particles by using the time-varying characteristic data of the plurality of scattered electric fields or scattering intensities obtained by the conversion section, and
corrects the particle size distribution of the particles by using the index value representing the temperature dependence of the particle sizes of the particles.

17. The optical measurement device according to claim 15,
wherein the particle size distribution calculation section obtains a second temperature after the particles at a first temperature have undergone a temperature rise due to light absorption of the incident light, and obtains the particle size distribution of the particles by using the second temperature for a diffusion coefficient obtained from the time-varying characteristic data of the plurality of scattered electric fields or scattering intensities.

18. The optical measurement device according to claim 12 or 15,
wherein the scattered light is scattered light obtained by causing the incident light to be incident while varying a value of at least any one of a scattering angle or a measurement wavelength among measurement parameters.

19. The optical measurement device according to any one of claims 12 to 17, further comprising:
a measurement unit that measures the intensity of the incident light.

20. The optical measurement device according to any one of claims 12 to 17, further comprising:
a low-coherence interferometer.

21. The optical measurement device according to any one of claims 12 to 17,

wherein the measurement section is a section that measures, a plurality of times, a scattering intensity of the scattered light obtained by causing the incident light to be incident on the dispersion liquid while varying the intensity of the incident light to obtain a plurality of scattering intensity data, and
the conversion section is a section that acquires the time-varying characteristic data of the plurality of scattered electric fields or scattering intensities from the plurality of scattering intensity data obtained by the measurement section.

22. The optical measurement device according to claim 18,

wherein the dispersion liquid contains a plurality of particle types,
the conversion section converts signals of a plurality of scattered light beams obtained by the measurement section into a plurality of time-averaged scattered electric field data or time-averaged scattering intensity data, and
the particle size calculation section calculates a particle size for each of the plurality of particle types from the time-averaged scattered electric field data or the time-averaged scattering intensity data and the time-varying characteristic data.

23. The optical measurement device according to claim 18,

wherein the dispersion liquid contains a plurality of particle types,
the conversion section converts signals of a plurality of scattered light beams obtained by the measurement section into a plurality of time-averaged scattered electric field data or time-averaged scattering intensity data, and
the particle size distribution calculation section calculates a particle size distribution for each of the plurality of particle types from the time-averaged scattered electric field data or the time-averaged scattering intensity data and the time-varying characteristic data.

24. The optical measurement device according to claim 22,

wherein the measurement section is a section that measures, a plurality of times, a scattering intensity of the scattered light obtained by causing the incident light to be incident on the dispersion liquid while varying the intensity of the incident light to obtain a plurality of scattering intensity data and measures, a plurality of times, a scattering intensity of the scattered light obtained by causing the incident light to be incident while varying the value of at least any one of the scattering angle or the measurement wavelength among the measurement parameters to obtain a plurality of scattering intensity data, and

the conversion section is a step of calculating the time-varying characteristic data of the plurality of scattered electric fields or scattering intensities from the plurality of scattering intensity data obtained by the measurement section.

25. The optical measurement device according to any one of claims 12 to 17,
wherein the time-varying characteristic data of the scattered electric fields or the scattering intensities is an autocorrelation function or a power spectrum.

## FIG. 1

## FIG. 2

## FIG. 3

## FIG. 4

## FIG. 5

## FIG. 6

FIG. 7

EP 4 745 554 A1

## FIG. 8

CONVERSION SECTION — 38a

PARTICLE SIZE CALCULATION SECTION — 38b

PARTICLE SIZE DISTRIBUTION CALCULATION SECTION — 38c

PROCESSING SECTION

EP 4 745 554 A1

FIG. 9

## FIG. 10

```
┌─────────────────────────────┐
│            START            │
└─────────────────────────────┘
              │
              ▼          ⌐S10
┌─────────────────────────────┐
│         MEASUREMENT         │
└─────────────────────────────┘
              │
              ▼          ⌐S12
┌─────────────────────────────┐          ⌐S14
│      EXPERIMENTAL DATA       │   ┌──────────────────────────┐
└─────────────────────────────┘   │  PRE-CALCULATED VALUE    │
              │                    │   (PARTICLE A AND         │
              ▼          ⌐S16      │    PARTICLE B)            │
┌─────────────────────────────┐   └──────────────────────────┘
│         OPTIMIZATION         │                │
│     (MINIMIZATION OF         │◄───────────────┘
│      EVALUATION VALUE)       │
└─────────────────────────────┘
              │
              ▼          ⌐S18
┌─────────────────────────────┐
│       ANALYSIS RESULT        │
│      (PARTICLE SIZE          │
│  DISTRIBUTION FOR EACH       │
│   PARTICLE TYPE AND          │
│     PARTICLE TYPE            │
│     DETERMINATION)           │
└─────────────────────────────┘
              │
              ▼
┌─────────────────────────────┐
│             END             │
└─────────────────────────────┘
```

# FIG. 11

NUMBER OF PARTICLES $N_{d'}^A$

$d_0$  $d_M$  PARTICLE SIZE $d'$

# FIG. 12

NUMBER OF PARTICLES $N_{d'}^B$

$d_0$  $d_M$  PARTICLE SIZE $d'$

FIG. 13

```
          ┌─────────────────────┐
          │        START        │
          └─────────────────────┘
                     │
                     ▼               ┌─S20
          ┌─────────────────────┐
          │     MEASUREMENT     │
          └─────────────────────┘
                     │
                     ▼               ┌─S22                                      ┌─S24
          ┌─────────────────────┐              ┌──────────────────────────────┐
          │  EXPERIMENTAL DATA  │              │  PRE-CALCULATED VALUE        │
          └─────────────────────┘              │  (SCATTERING INTENSITY       │
                     │               ┌─S26      │  AND AUTOCORRELATION         │
                     ▼                          │  FUNCTION)                   │
          ┌─────────────────────┐              └──────────────────────────────┘
          │    OPTIMIZATION     │◄─────────────────────────┘
          │   (MINIMIZATION OF  │
          │  EVALUATION VALUE)  │
          └─────────────────────┘
                     │
                     ▼               ┌─S28
          ┌─────────────────────┐
          │  OPTIMIZATION RESULT │
          │ (NUMBER OF PARTICLE │
          │ TYPES, REFRACTIVE INDEX │                                          ┌─S34
          │ FOR EACH PARTICLE TYPE, │            ┌──────────────────────────────┐
          │ AND PARTICLE SIZE   │              │      LIBRARY                 │
          │ DISTRIBUTION FOR EACH │            │  (REFRACTIVE INDEX OF        │
          │   PARTICLE TYPE)    │              │      MATERIAL)               │
          └─────────────────────┘              └──────────────────────────────┘
                     │               ┌─S30
                     ▼
          ┌─────────────────────┐
          │     REFRACTIVE      │◄─────────────────────────┘
          │   INDEX MATCHING    │
          └─────────────────────┘
                     │               ┌─S32
                     ▼
          ┌─────────────────────┐
          │   ANALYSIS RESULT   │
          │ (MATERIAL FOR EACH  │
          │   PARTICLE TYPE)    │
          └─────────────────────┘
                     │
                     ▼
          ┌─────────────────────┐
          │         END         │
          └─────────────────────┘
```

FIG. 14

FIG. 15

FIG. 16

# FIG. 17

```
┌─────────────────────┐
│        START        │
└─────────────────────┘
            │
            ▼                        S40
┌─────────────────────┐
│     MEASUREMENT     │
└─────────────────────┘
            │
            ▼                        S42
┌─────────────────────┐
│  EXPERIMENTAL DATA  │
└─────────────────────┘
            │
            ▼                        S44
┌─────────────────────┐
│     OPTIMIZATION    │
│   (MINIMIZATION OF  │
│   EVALUATION VALUE) │◄──────┐
└─────────────────────┘       │
            │                 │
            ▼            S46   │
┌─────────────────────┐       │
│ OPTIMIZATION RESULT │       │
│   (PARTICLE SIZE    │       │
│ DISTRIBUTION FOR EACH│       │
│    PARTICLE TYPE)   │       │
└─────────────────────┘       │
            │                 │
            ▼            S48   │
┌─────────────────────┐       │
│   ANALYSIS RESULT   │       │
│ (NUMBER OF PARTICLE │       │
│ TYPES AND MATERIAL FOR│      │
│  EACH PARTICLE TYPE)│       │
└─────────────────────┘       │
            │                 │
            ▼                 │
┌─────────────────────┐       │
│         END         │       │
└─────────────────────┘       │
```

S50
```
┌─────────────────────┐
│       LIBRARY       │
│  (REFRACTIVE INDEX OF│
│      MATERIAL)      │
└─────────────────────┘
            │
            ▼              S52
┌─────────────────────┐
│  NUMBER OF PARTICLE │
│ TYPES AND CANDIDATES│
│ FOR MATERIAL FOR EACH│
│    PARTICLE TYPE    │
│  (REFRACTIVE INDEX OF│
│      MATERIAL)      │
└─────────────────────┘
            │
            ▼              S54
┌─────────────────────┐
│ PRE-CALCULATED VALUE│
│ (SCATTERING INTENSITY│
│ AND AUTOCORRELATION │
│      FUNCTION)      │
└─────────────────────┘
```

**EP 4 745 554 A1**

# INTERNATIONAL SEARCH REPORT

International application No.

**PCT/JP2024/022724**

| A. | CLASSIFICATION OF SUBJECT MATTER |
|---|---|

*G01N 15/0205*(2024.01)i; *G01N 15/02*(2024.01)i; *G01N 21/49*(2006.01)i
FI:   G01N15/0205; G01N15/02 D; G01N21/49 Z

According to International Patent Classification (IPC) or to both national classification and IPC

| B. | FIELDS SEARCHED |
|---|---|

Minimum documentation searched (classification system followed by classification symbols)

G01N15/0205; G01N15/02; G01N21/49

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/168555 A1 (FUJIFILM CORPORATION) 11 August 2022 (2022-08-11) | 1-25 |
| A | JP 2014-006173 A (GOTO IKUEIKAI) 16 January 2014 (2014-01-16) | 1-25 |
| A | JP 2001-091442 A (HORIBA, LTD.) 06 April 2001 (2001-04-06) | 1-25 |
| A | JP 2023-513471 A (THE GENERAL HOSPITAL CORP.) 31 March 2023 (2023-03-31) | 1-25 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2024** | **06 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

57

**INTERNATIONAL SEARCH REPORT**
Information on patent family members

International application No.

**PCT/JP2024/022724**

| Patent document cited in search report | | | Publication date (day/month/year) | Patent family member(s) | | | Publication date (day/month/year) |
|---|---|---|---|---|---|---|---|
| WO | 2022/168555 | A1 | 11 August 2022 | US | 2023/0375455 | A1 | |
| | | | | EP | 4290214 | A1 | |
| | | | | CN | 116848394 | A | |
| | | | | KR | 10-2023-0125050 | A | |
| JP | 2014-006173 | A | 16 January 2014 | (Family: none) | | | |
| JP | 2001-091442 | A | 06 April 2001 | (Family: none) | | | |
| JP | 2023-513471 | A | 31 March 2023 | US | 2023/0083866 | A1 | |
| | | | | WO | 2021/155361 | A1 | |

Form PCT/ISA/210 (patent family annex) (July 2022)

**EP 4 745 554 A1**

**Patent documents cited in the description**

- WO 2013077137 A